# EUROPEAN PATENT APPLICATION

(11) **EP 4 506 163 A1**
(43) Date of publication of application: **12.02.2025**
(21) Application number: 24153353.8
(22) Date of filing: 23.01.2024
(51) Int. Cl.: B32B 27/02, B32B 27/12, B32B 27/40, B32B 3/28, B32B 3/30, B32B 5/02, B32B 5/18, B32B 7/02, B32B 7/12, B32B 27/06, B32B 27/08, B32B 27/30, B32B 27/32

(54) **SHEET AND INFLATABLE PRODUCT**

(30) Priority: 08.08.2023 CN 202310996877; 08.08.2023 CN 202322124932 U
(62) Divisional of application: 24153951.9
(71) Applicant: Bestway Inflatables & Material Corp., Shanghai 201812 (CN)
(72) Inventor: Zeng, Xianglin, Shanghai, 201812 (CN)
(74) Representative: Gulde & Partner

(57) **Abstract**

Provided is a sheet (200) comprising: a fabric layer (202); an adhesive layer (204); and a substrate layer (206) having a first layer (208) comprising a first polymer material and a second layer (210) comprising a second polymer material, the first polymer material having a melting point higher than a melting point of the second polymer material, wherein the substrate layer (206) is formed by converging the first polymer material in a flowable state and the second polymer material in a flowable state, and the fabric layer (202) is laminated to the first layer (208) through the adhesive layer (204). Further provided is an inflatable product, wherein at least a portion of the inflatable product is made of the sheet (200). The inflatable product may be an inflatable pad (100) comprising a top sheet (102) and a bottom sheet (104) connected to each other to jointly define an inflatable chamber (106), the top sheet (102) and the bottom sheet (104) being made of the sheet (200).

## Description

### Technical Field

The present invention generally relates to the field of sheet manufacturing. In particular, the present invention relates to a sheet, and an inflatable product at least partially made of the sheet.

### Background Art

During outdoor camping, campers often require a portable inflatable pad for thermal insulation and cushioning due to the cold and hard ground in the wild. The inflatable pad typically includes a top sheet and a bottom sheet connected to each other to form an inflatable chamber. The top sheet and bottom sheet of the existing inflatable pads are usually composite sheets. For example, the top sheet and the bottom sheet may be composite sheets formed by laminating fabric to a thermoplastic polyurethane (TPU) film, where the fabric serves as an outer layer and the TPU film serves as an inner layer. The role of TPU film is to form an airtight chamber of the inflatable pad. The fabric is breathable and unable to prevent air communication, while the TPU film retains the gas inside the product during inflation and prevents air leakage. The fabric is intended to enhance the tactile sensation of the surface of the inflatable pad when a human body comes into contact with the inflatable pad and to improve the comfort of the human body when in contact with inflatable pad.

In order to facilitate the storage and portability of inflatable pads, it is often desired to make the inflatable pads lightweight and thin. Therefore, while ensuring the airtightness of the inflatable pads, it is preferable for the thickness of the TPU film to be as thin as possible. Currently, the TPU film used in the composite sheet of most inflatable pads is typically composed of one or more layers of TPU material with uniform melting points, commonly referred to as a single-temperature TPU film.

During the manufacturing process of the inflatable pads, technicians typically place a top sheet formed by fabric laminated to a single-temperature TPU film and a bottom sheet formed by fabric laminated to a single-temperature TPU film together on a welding apparatus. The top sheet is placed with its fabric facing upward and its single-temperature TPU film facing downward, while the bottom sheet is placed with its single-temperature TPU film facing upward and its fabric facing downward. The top sheet is placed over the bottom sheet. Thus, the single-temperature TPU film of the top sheet and the single-temperature TPU film of the bottom sheet are placed facing each other. The technicians then use the welding apparatus to weld the single-temperature TPU film of the top sheet and the single-temperature TPU film of the bottom sheet together. The outer fabric of the top sheet and the outer fabric of the bottom sheet are placed outward and are not welded to other materials.

When the composite sheet containing the single-temperature TPU film and the fabric is used to make inflatable pad products, high precision is required for the production equipment/die and production process of inflatable pads. Specifically, when the single-temperature TPU film of the top sheet and the single-temperature TPU film of the bottom sheet are welded to each other, there is heat loss during the heat transfer within the welding apparatus, and the heat loss is usually difficult to measure accurately and fluctuates. As a result, the actual welding temperature often inevitably deviates from the set welding temperature, and the deviation also fluctuates, making it challenging to control and predict the deviation. In another aspect, dies may be used when welding the single-temperature TPU film of the top sheet and the single-temperature TPU film of the bottom sheet, in which case the technicians typically install the dies above and below the welding apparatus, and the heat of the welding apparatus is transferred to the dies, which in turn transfer the heat to the single-temperature TPU films, thus welding the single-temperature TPU films of the top sheet and the bottom sheet. The shapes, materials, sizes and thicknesses of various dies are different, so the thermal conductivity of each die may be different, which will further lead to the actual welding temperature deviating from the set welding temperature. In addition, the ambient temperature around the welding apparatus may vary due to different room temperatures during each production, which may also cause the actual welding temperature to deviate from the set welding temperature. Finally, the welding duration controlled by technicians may also have deviations. Excessive welding time can cause overheating, while insufficient welding time can lead to underheating.

Higher welding temperature or longer welding time may cause over-melting of the single-temperature TPU film, resulting in the formation of small holes or void areas that can lead to gas leakage when the single-temperature TPU film is applied to fabrication of an inflatable pad. Conversely, using a lower welding temperature or shorter welding time may result in insufficient melting of the single-temperature TPU film of the top and bottom sheets of the inflatable pad. This can lead to inadequate adhesion or poor bonding between the top and bottom sheets, preventing the formation of a fully sealed gas chamber and causing gas leakage during the use of the inflatable pad, rendering the inflatable pad unusable.

To sum up, when using the composite sheet formed by laminating a single-temperature TPU film and fabric to manufacture inflatable pads, it is challenging to achieve precise control over welding temperature and welding time due to inherent limitations in equipment, environment, and manual operation. Whether using higher welding temperature and/or longer welding time or lower welding temperature and/or shorter welding time, it can ultimately result in gas leakage of the inflatable pads, leading to product defects and a decrease in the quality rate of the final products.

### Summary of the Invention

The present invention aims at solving the above-mentioned problem in the prior art by providing an improved sheet, and an inflatable product at least partially made of the sheet.

To this end, according to a first aspect of the present invention, there is provided a sheet including a fabric layer, an adhesive layer, and a substrate layer having a first layer including a first polymer material and a second layer including a second polymer material, the first polymer material having a melting point higher than a melting point of the second polymer material, wherein the substrate layer is formed by converging the first polymer material in a flowable state and the second polymer material in a flowable state, and the fabric layer is laminated to the first layer through the adhesive layer.

Since the first polymer material of the first layer and the second polymer material of the second layer of the sheet according to the present invention have different melting points, when the sheet is thermally processed, for instance welded, the temperature may be set between the melting point of the first polymer material and the melting point of the second polymer material, such that the second layer with a lower melting point can be melted for welding, while the first layer with a higher melting point remains structurally intact and impermeable without melting. If there is a certain deviation between the actual welding temperature and the set welding temperature due to temperature deviations of a welding apparatus, thermal conductivity differences of dies, ambient temperature variations, welding time deviations, or other factors, as long as the actual welding temperature is still between the melting point of the first polymer material and the melting point of the second polymer material, the second layer can still be melted for welding, while the first layer remains intact and impermeable. Therefore, when the substrate layer of the sheet includes the first layer and the second layer, the sensitivity of the product quality to the welding temperature is greatly reduced. In other words, even if there is a deviation in the welding temperature, regardless of whether the welding temperature deviates higher or lower, as long as the resulting temperature is still between the melting point of the first polymer material and the melting point of the second polymer material, the manufactured inflatable products will remain compliant and meet the required standards. Therefore, using the sheet of the present invention for welding can greatly reduce the negative influence of the welding temperature deviation and the welding time deviation on the product quality, thereby reducing gas leakage issues of the inflatable products, improving the gas tightness of the inflatable products, increasing the yield rate, reducing the production costs, and at the same time, simplifying the welding operation of technicians. Moreover, as the substrate layer of the sheet is formed by converging the first polymer material in the flowable state and the second polymer material in the flowable state, no bubbles are formed between the first layer and the second layer, so that the bonding strength between the first layer and the second layer is high, making them less prone to separation. The thickness of the substrate layer including the first layer and the second layer may be approximately the same as that of a conventional substrate layer, as mentioned above, having only one layer of single-temperature TPU film, so that the sheet of the present invention still maintains the characteristics of thinness and lightweight but at a higher quality level. Further, compared with a substrate layer of a single-temperature TPU film, a substrate layer including the first layer and the second layer has lower requirements for welding operation and can withstand a wider range of welding temperatures and time variations without affecting product quality, so that a substrate layer including the first layer and the second layer can even be made thinner than a substrate layer of a single-temperature TPU film. Thereby, the overall weight may be reduced or does at least not increase. Further, a higher yield rate, lower manufacturing costs, better mechanical properties and better gas tightness can be achieved.

In accordance with the above technical concepts, the first aspect of the present invention may further include any one or more of the following alternatives.

In some alternatives, the substrate layer includes an intermediate layer between the first layer and the second layer, and the intermediate layer includes a mixture of the first polymer material and the second polymer material.

In some alternatives, each of the first polymer material and the second polymer material is composed of one or more of a thermoplastic polyurethane elastomer, polyethylene, polypropylene, polyvinyl chloride, polyvinylidene chloride, or polyurethane.

In some alternatives, both the first polymer material and the second polymer material are thermoplastic polyurethane elastomers with different melting points.

In some alternatives, the melting point of the first polymer material is at least 15°C higher than the melting point of the second polymer material. Preferably, the melting point is a least 17°C higher. Most preferably, the melting point is at least 20°C higher. The difference in the melting points of the first and the second polymer material may be set in dependence of the area to be melted. In other words, a larger melting area may imply larger temperature deviations.

In some alternatives, the adhesive layer is formed by polyurethane (PU) adhesive.

In some alternatives, the polyurethane adhesive is solvent-based PU adhesive, water-based PU adhesive, or polyurethane reactive (PUR) hot melt adhesive.

In some alternatives, the fabric layer includes a polyurethane coating on a side facing the adhesive layer.

In some alternatives, the first layer has a Shore A hardness ranging from 80 HA to 98 HA, and the second layer has a Shore A hardness ranging from 75 HA to 95 HA. In other words, the Shore A hardness of the first layer may be higher than the Shore A hardness of the second layer, preferably by 5 HA, more preferably by 10 HA. Since the first layer is closer to the outside than the second layer, an increased hardness is favorable for the durability of the first layer.

In some alternatives, a ratio of thickness of the first layer to the second layer ranges from 1 : 1 to 1 : 4. Preferably, a ratio of 1 : 2 to 1 : 3 may be used. When the second layer is melted, an increased thickness may be beneficial.

In some alternatives, the substrate layer has a thickness ranging from 0.01 mm to 0.40 mm. Preferably, the thickness ranges from 0.05 mm to 0.25 mm.

In some alternatives, when the sheet is used to manufacture other inflatable products or non-inflatable products, the thickness ranges from 0.01 mm to 2 mm.

According to a second aspect of the present invention, there is provided an inflatable product, at least a portion of which is made from the sheet according to the first aspect of the present invention.

The advantages as mentioned regarding the sheet material of the first aspect of the present invention apply to the inflatable product accordingly.

The second aspect of the present invention may further include any one or more of the following alternatives.

In some alternatives, the inflatable product is an inflatable pad including a top sheet and a bottom sheet connected to each other to jointly define an inflatable chamber, the top sheet and the bottom sheet being made of the sheet.

In some alternatives, the inflatable product further includes a connecting sheet, the connecting sheet being arranged in the inflatable chamber between the top sheet and the bottom sheet and including a plurality of first welding regions and a plurality of second welding regions, wherein the plurality of first welding regions and the plurality of second welding regions are staggered from each other, the plurality of first welding regions are welded to the top sheet, and the plurality of second welding regions are welded to the bottom sheet.

In some alternatives, the inflatable product further includes at least one thermal insulation sheet arranged in the inflatable chamber, each thermal insulation sheet may include a polymer substrate and a metal coating applied to at least one of two opposite sides of the polymer substrate. The metal layer is provided to reflect thermal radiation, thereby supporting thermal insulation. Optionally, thermally insulating chambers are formed between the top sheet and the first thermal insulation sheet and/or between the bottom sheet and the second thermal insulation sheet.

In some alternatives, the inflatable product further includes a plurality of tensioning members, each tensioning member having a top edge and a bottom edge welded to the top sheet and the bottom sheet, respectively. The tensioning members allow the inflatable product to have a pre-defined shape, when inflated. The pre-defined shape may be a flat shape, a rounded shape or a mixture of both along a longitudinal direction of the inflatable product. Additionally, with the tensioning members, displacement of the top sheet relative to the bottom sheet is prevented or at least largely reduced.

In some alternatives, the tensioning member is made of the sheet or made of the substrate layer of the sheet.

In some alternatives, the inflatable product further includes a foam core, and the top sheet and the bottom sheet are respectively attached to a top surface and a bottom surface of the foam core. A foam core provides stronger support for the cavities of the inflatable product. Optionally, the foam core may only fill a portion of the inflatable product. Preferably, the foam core may fill at least one fourth of the cavity of the inflatable product. More preferably, the foam core may fill half of the cavity of the inflatable product. Even more preferably, the foam core may fill three fourth of the cavity of the inflatable product. Optionally, the filling is distributed evenly.

In some alternatives, the foam core includes a plurality of distributed apertures or a plurality of distributed grooves. The apertures may be through-holes or blind holes. The manner of distribution may be uniformly or irregular. An irregular arrangement may be such that certain body sections are provided with additional support. Additional support may be realized by apertures of smaller diameter or grooves of smaller width, compared to the other sections. The diameter of an aperture may be between 20% and 80% of the thickness of the foam core in a thickness direction. Preferably, the diameter may be between 30% and 70%. Most preferably, the diameter may be between 45% and 60%.

In some alternatives, the inflatable product further includes a lateral sheet, the periphery of the top sheet is connected to a top edge of the lateral sheet, and the periphery of the bottom sheet is connected to a bottom edge of the lateral sheet, such that the top sheet, the bottom sheet and the lateral sheet jointly define the inflatable chamber.

According to a third aspect of the present invention, there is provided a sheet manufacturing apparatus, including: a first feeding device and a second feeding device configured to supply a first polymer material in a flowable state and a second polymer material in a flowable state, respectively, the first polymer material having a melting point higher than a melting point of the second polymer material; an extrusion device including a first flow channel, a second flow channel, a converging chamber, and a material outlet, each of the first flow channel, the second flow channel, and the material outlet being in communication with the converging chamber, the first flow channel and the second flow channel being configured to direct the first polymer material in the flowable state from the first feeding device and the second polymer material in the flowable state from the second feeding device, respectively, into the converging chamber, the first polymer material in the flowable state and the second polymer material in the flowable state being adapted to converge within the converging chamber and to be extruded from the material outlet to form a first material sheet, and the first material sheet having a first layer including the first polymer material and a second layer including the second polymer material; a third feeding device configured to supply a fabric piece; and a lamination device configured to laminate the fabric piece to a first layer of the first material sheet through an adhesive material to form a second material sheet, the second material sheet including a fabric layer formed by the fabric piece, an adhesive layer formed by the adhesive material, and a substrate layer formed by the first material sheet.

The third aspect of the present invention may further include any one or more of the following alternatives.

In some alternatives, the lamination device is configured to apply the adhesive material onto the fabric piece or the first layer of the first material sheet prior to laminating the fabric piece to the first material sheet. Optionally, the adhesive material is applied directly to the fabric piece. In particular, the adhesive material is applied to a side of the fabric which is attached to the first material sheet.

In some alternatives, the sheet manufacturing apparatus further includes a pressing device configured to press the first material sheet delivered from the material outlet, the pressing including flattening and/or embossing.

In some alternatives, the sheet manufacturing apparatus further includes a cooling device configured to cool the pressed first material sheet. Cooling the first material sheet, preferably to ambient temperature, is beneficial for the further processing in terms of product quality like thickness deviation and flatness.

In some alternatives, the sheet manufacturing apparatus further includes a trimming device; and the sheet manufacturing apparatus is configured to deliver the cooled first material sheet to the trimming device for trimming and then deliver the trimmed first material sheet to the lamination device. Trimming refers to cutting-off of the peripheral edges of a sheet. Trimming allows for a precise preparation of the first material sheet for its further use with trimmed side edges. The trimmed edges may be linear edges.

In some alternatives, the sheet manufacturing apparatus further includes a winding device configured to wind the trimmed first material sheet into a first material sheet roll and an unwinding device configured to unwind the first material sheet roll and deliver the trimmed first material sheet to the lamination device. Winding the material sheet into rolls facilitates transport and subsequent processing. Further, the material sheet may be laminated to another layer of the same or different material, thereby increasing thickness and durability of the resulting laminate.

In some alternatives, the sheet manufacturing apparatus further includes a trimming device, the sheet manufacturing apparatus is configured to deliver the cooled first material sheet to the lamination device to form the second material sheet, and the trimming device is configured to trim the second material sheet. After lamination, further trimming of the edges of the second material may be desirable for linear edges. The resulting width of the second material after trimming may be equal to or smaller than the trimmed first material.

In some alternatives, the sheet manufacturing apparatus is configured to deliver the first material sheet from the material outlet to the lamination device, and the lamination device is configured to apply the adhesive material onto the fabric piece prior to laminating the fabric piece to the first material sheet. Directly delivering the first material to the lamination device may facilitate efficiency as the need for temporary storage is eliminated.

In some alternatives, the sheet manufacturing apparatus further includes a pressing device configured to press the second material sheet delivered from the lamination device, the pressing including flattening and/or embossing. Pressing the second material sheet after lamination ensures a consistent, reliable and flat lamination. Further, embossing may provide the surface with a pattern which may be functional, like water repellant or stain resistant and/or appealing, like with decorative elements or symbols.

In some alternatives, the lamination device is further configured to press the second material sheet while laminating the fabric piece onto which the adhesive material has been applied to the first material sheet to form the second material sheet, the pressing including flattening and/or embossing. Combining the steps of lamination and pressing facilitates efficiency of production in terms of production time.

In some alternatives, the sheet manufacturing apparatus further includes a cooling device configured to cool the pressed second material sheet. Cooling the second material sheet, preferably to ambient temperature, is beneficial for the further processing in terms of product quality like thickness deviation and flatness.

In some alternatives, the sheet manufacturing apparatus further includes a trimming device configured to trim the cooled second material sheet. Trimming refers to cutting-off of the peripheral edges of a sheet. Trimming allows for a precise preparation of the second material sheet for its further use with trimmed side edges. The trimmed edges may be linear edges.

According to a fourth aspect of the present invention, there is provided a sheet manufacturing method, the sheet manufacturing method including: providing a first polymer material in a flowable state, a second polymer material in a flowable state, an adhesive material, and a fabric piece, the first polymer material having a melting point higher than a melting point of the second polymer material; causing the first polymer material in the flowable state and the second polymer material in the flowable state to converge to form a first material sheet, the first material sheet having a first layer including the first polymer material and a second layer including the second polymer material; and laminating the fabric piece to the first layer of the first material sheet through the adhesive material to form a second material sheet, the second material sheet including a fabric layer formed by the fabric piece, an adhesive layer formed by the adhesive material, and a substrate layer formed by the first material sheet.

The fourth aspect of the present invention may further include any one or more of the following alternatives.

In some alternatives, the first material sheet includes an intermediate layer between the first layer and the second layer, and the intermediate layer includes a mixture of the first polymer material and the second polymer material. The intermediate layer facilitates the permanent connection between the first polymer material and the second polymer material. The intermediate layer may be directly formed by adjusting the flowable state of first and second polymer materials.

In some alternatives, both the first polymer material and the second polymer material are thermoplastic polyurethane elastomers. Using the same type of material has higher bonding strength than using different types of materials for the first and the second polymer material.

In some alternatives, the sheet manufacturing method further includes applying the adhesive material onto the fabric piece or the first layer of the first material sheet prior to laminating the fabric piece to the first material sheet.

In some alternatives, the sheet manufacturing method further includes pressing the first material sheet after forming the first material sheet, the pressing including flattening and/or embossing. Pressing the first material sheet after forming ensures a consistent, reliable and flat surface of the first material sheet. Further, embossing may provide the surface with a pattern which may be functional, like water repellant or stain resistant or adhesion enhancing and/or appealing, like with decorative elements or symbols.

In some alternatives, the sheet manufacturing method further includes cooling the pressed first material sheet. Cooling the first material sheet, preferably to ambient temperature, is beneficial for the further processing in terms of product quality like thickness deviation and flatness.

In some alternatives, the sheet manufacturing method further includes trimming the cooled first material sheet, and the fabric piece is laminated to the trimmed first material sheet through the adhesive material to form the second material sheet. Trimming refers to cutting-off of the peripheral edges of a sheet. Trimming allows for a precise preparation of the first material sheet for its further use with trimmed side edges. The trimmed edges may be linear edges.

In some alternatives, the sheet manufacturing method further includes winding the trimmed first material sheet into a first material sheet roll, and unwinding the first material sheet roll to provide the trimmed first material sheet for laminating to the fabric piece. Winding the material sheet into rolls facilitates intermediate storage, transport and/or subsequent processing. Further, the material sheet may be laminated to a fabric piece, thereby increasing thickness, durability and perception of the surface of the resulting laminate.

In some alternatives, the sheet manufacturing method further includes trimming the second material sheet after laminating the fabric piece to the first material sheet through the adhesive material to form the second material sheet. After lamination, further trimming of the edges of the second material may be desirable for linear edges. The resulting width of the second material after trimming may be equal to or smaller than the trimmed first material.

In some alternatives, the sheet manufacturing method further includes applying the adhesive material onto the fabric piece and laminating the fabric piece onto which the adhesive material has been applied to the first material sheet to form the second material sheet.

In some alternatives, the sheet manufacturing method further includes pressing the second material sheet while or after laminating the fabric piece onto which the adhesive material has been applied to the first material sheet to form the second material sheet, the pressing including flattening and/or embossing. Pressing the second material sheet after lamination ensures a consistent, reliable and flat lamination. Further, embossing may provide the surface with a pattern which may be functional, like water repellant or stain resistant and/or appealing, like with decorative elements or symbols.

In some alternatives, the sheet manufacturing method further includes cooling the pressed second material sheet. Cooling the second material sheet, preferably to ambient temperature, is beneficial for the further processing in terms of product quality like thickness deviation and flatness.

In some alternatives, the sheet manufacturing method further includes trimming the cooled second material sheet. Further trimming of the edges of the second material may be desirable for linear edges. The resulting width of the second material after trimming may be equal to or smaller than the trimmed first material.

The welding operation for the sheet according to the present invention is simplified and easier to control, and the bonding strength between the layers of the sheet is high, making them less prone to separation. Accordingly, the inflatable product made at least partially from this sheet according to the present invention is easier to manufacture and has a high yield rate, thereby reducing the manufacturing costs, and the resulting inflatable products exhibit excellent mechanical properties and gas tightness. According to the sheet manufacturing apparatus and the sheet manufacturing method of the present invention, a sheet having the above advantages can be manufactured.

### Brief Description of the Drawings

Other features and advantages of the present invention will be better understood from the following alternative embodiments described in detail with reference to the accompanying drawings. Like or similar components are denoted by like reference numerals in the accompanying drawings, in which:
Fig. 1 is a schematic perspective view of a first embodiment of an inflatable pad according to the present invention;
Fig. 2 is a schematic exploded view of the inflatable pad of Fig. 1;
Fig. 3A is a schematic cross-sectional view of an inflatable pad;
Fig. 3B is a schematic diagram of a thermal insulation sheet of an inflatable pad ;
Fig. 4 is a schematic exploded view of a second embodiment of an inflatable pad according to the present invention;
Fig. 5 is a schematic exploded view of a third embodiment of an inflatable pad according to the present invention;
Fig. 6 is a schematic exploded view of a fourth embodiment of an inflatable pad according to the present invention;
Fig. 7 is a schematic exploded view of a fifth embodiment of an inflatable pad according to the present invention;
Fig. 8 is a schematic exploded view of a sixth embodiment of an inflatable pad according to the present invention;
Fig. 9 is a schematic exploded view of a seventh embodiment of an inflatable pad according to the present invention;
Fig. 10 is a schematic perspective view of an eighth embodiment of an inflatable pad according to the present invention;
Fig. 11 is a schematic exploded view of the inflatable pad of Fig. 10;
Fig. 12 is a schematic diagram of an exemplary embodiment of a sheet according to the present invention;
Figs. 13A and 13B are schematic diagrams of a first portion and a second portion, respectively, of a first embodiment of a sheet manufacturing apparatus according to the present invention;
Fig. 14A is an enlarged partial view of the first portion of the sheet manufacturing apparatus in Fig. 13A;
Fig. 14B is another enlarged partial view of the first portion of the sheet manufacturing apparatus in Fig. 13A;
Fig. 15 is a schematic diagram of the second portion of a second embodiment of a sheet manufacturing apparatus according to the present invention;
Fig. 16 is a schematic diagram of a third embodiment of a sheet manufacturing apparatus according to the present invention;
Fig. 17 is a schematic diagram of a fourth embodiment of a sheet manufacturing apparatus according to the present invention;
Fig. 18 is a schematic diagram of a fifth embodiment of a sheet manufacturing apparatus according to the present invention; and
Fig. 19 is a schematic flow chart of an exemplary embodiment of a sheet manufacturing method according to the present invention.

### Detailed Description of Embodiments

The implementation and application of the embodiments will be discussed in detail below. However, it should be understood that the specific embodiments discussed are merely illustrative of specific ways to implement and use the present invention, rather than limiting the scope of the present invention. In the description, the expression of the structural positions of components, such as upper, lower, top, and bottom, are not absolute but relative. The orientation expressions are appropriate when the various components are arranged as shown in the figures, but should change accordingly when the positions of the components in the figures change. The terms "first", "second", etc. are used for descriptive purposes only and should not be construed as indicating or implying relative importance or implying the number of technical features indicated. In the present invention, the terms such as "mount", "engage", "connect", "fix" should be interpreted in a broad sense unless explicitly defined otherwise, which, for example, may refer to a fixed connection, a detachable connection, or an integral connection; or may refer to a direct connection, or an indirect connection by means of an intermediate medium. For those of ordinary skill in the art, the specific meaning of the terms mentioned above in the present invention should be construed according to specific circumstances.

Herein, an "inflatable product" has at least one inflatable chamber for inflating. When the pressure of the gas (e.g. air) in the inflatable chamber reaches a desired value, the inflatable product is in an inflated state and maintains a certain shape. Once the gas in the inflatable chamber of the inflatable product is discharged, the inflatable product is in a deflated state, and the volume of the inflatable product is reduced compared to when it is inflated, thus facilitating the storage of the inflatable product. The inflatable product includes but is not limited to an inflatable pad, an inflatable pool, an inflatable toy, an inflatable sofa, an inflatable tent and other products.

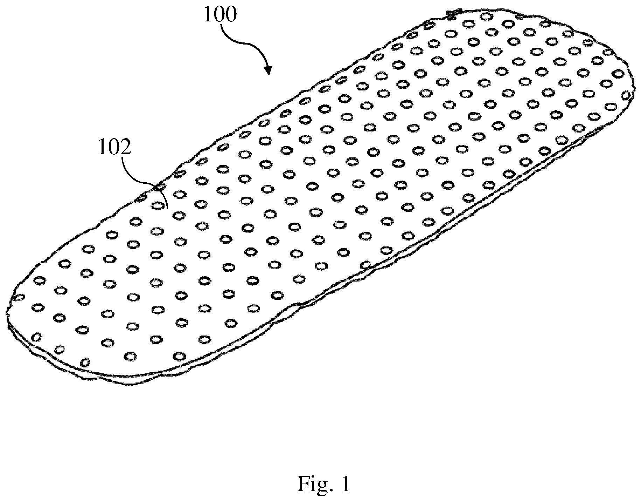

Figs. 1 to 11 illustrate various exemplary embodiments of an inflatable pad according to the present invention.

Referring to Fig. 1, a schematic perspective view of a first embodiment of an inflatable pad 100 with a top sheet 102 is shown. The surface of the top sheet may be provided with a pattern which may be regular. Possible embodiments thereof are explained hereafter.

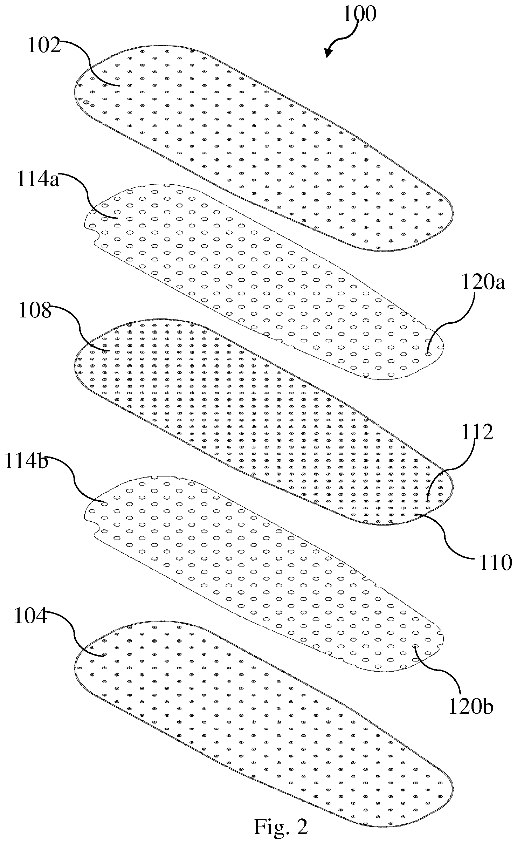

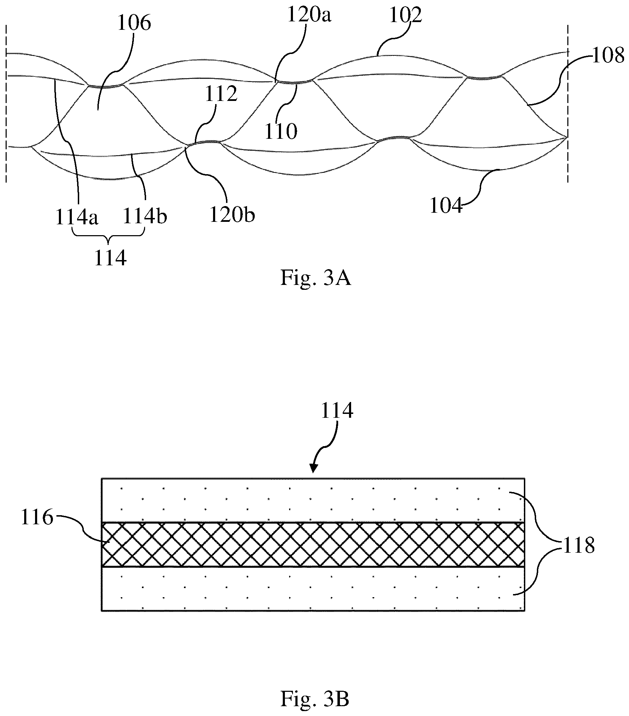

Referring to Fig. 2, a schematic exploded view of the inflatable pad of Fig. 1 is shown, wherein the inflatable pad 100 includes a top sheet 102 and a bottom sheet 104. The top sheet 102 and the bottom sheet 104 are connected to each other to jointly define an inflatable chamber 106 (cf. Fig. 3A). The top sheet 102 may be configured for the user to sit or lie on, and the bottom sheet 104 may be configured to be in contact with the ground. The top sheet 102 and the bottom sheet 104 may have substantially the same shape and size, and the outer periphery of the top sheet 102 and the outer periphery of the bottom sheet 104 are welded to each other by, for example, high frequency welding, hot press welding, ultrasonic welding or the like to define the inflatable chamber 106 between the top sheet 102 and the bottom sheet 104.

Fig. 3A is a schematic cross-sectional view of an inflatable pad 100 which may be used for the inflatable pad of Fig. 1 and Fig. 2. The structure of the inflatable pad 100 will be explained below.

Fig. 3B is a schematic diagram of a thermal insulation sheet 114 which may be used for the inflatable pad of Fig. 1 and Fig. 2. The structure of the thermal insulation sheet 114 will be explained below.

The outer sides of the top sheet 102 and the bottom sheet 104 of the inflatable pad 100 facing away from the inflatable chamber 106 may provide a comfortable touch; the inner sides of the top sheet 102 and the bottom sheet 104 opposite their outer sides facilitate easy welding during the manufacturing of the inflatable pad 100; and the top sheet 102 and the bottom sheet 104 retain good mechanical strength and air tightness after being welded in the process of manufacturing the inflatable pad 100, so that the inflatable pad 100 maintains a predetermined shape and does not leak air while in the inflated state.

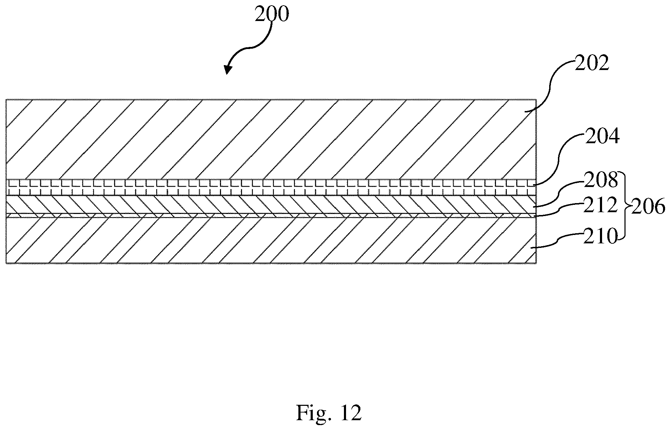

To this end, the present invention provides an improved sheet 200. Fig. 12 shows a schematic diagram of an exemplary embodiment of a sheet 200 according to the present invention.

Referring to Fig. 12, a sheet 200 may include: a fabric layer 202, an adhesive layer 204, and a substrate layer 206. The substrate layer 206 includes a first layer 208 and a second layer 210. The first layer 208 includes a first polymer material, and the second layer 210 includes a second polymer material. The first polymer material has a melting point higher than that of the second polymer material. The substrate layer 206 is formed by converging the first polymer material in a flowable/molten state and the second polymer material in a flowable/molten state, and the fabric layer 202 is laminated to the first layer 208 through the adhesive layer 204.

The top sheet 102 and the bottom sheet 104 of the inflatable pad 100 in Figs. 2 may be manufactured from the sheet 200 or only one of the two sheets 102, 104 may be manufactured from the sheet 200. For instance, one of the two layers may comprise the substrate layer 206 of the sheet 200 but not the fabric and the adhesive layer 202, 204. The sheet of the present invention will be described below mainly by taking the sheet for manufacturing inflatable pads as an example. It is to be appreciated that the sheet of the present invention may also be used to manufacture inflatable products other than inflatable pads or non-inflatable products.

During the manufacturing of the inflatable pad 100, the fabric layer 202 will be positioned on the outer side, facing away from the inflatable chamber, of the top sheet 102 and of the bottom sheet 104 to provide a comfortable touch; the second layer 210 of the substrate layer 206 formed of the second polymer material with a lower melting point will be located on the inner side, facing the inflatable chamber, of the top sheet 102 and of the bottom sheet 104 for welding; and meanwhile, the first layer 208 of the substrate layer 206 formed of the first polymer material with a higher melting point will be located between the fabric layer 202 and the second layer 210 and forms an impermeable barrier within the top sheet 102 and the bottom sheet 104.

When welding the top sheet 102 and the bottom sheet 104, such as welding the top sheet 102 and the bottom sheet 104 to each other or welding the top sheet 102 or the bottom sheet 104 to other components within the inflatable chamber 106 (the other components within the inflatable chamber 106 will be described further below), the welding temperature may be set between the melting point of the first polymer material and the melting point of the second polymer material. Thereby, the second layer 210 with the lower melting point can be melted for welding, while the first layer 208 with the higher melting point remains structurally intact and thus impermeable. Therefore, the sensitivity of the product quality to welding temperature is greatly reduced. In other words, even if there is a deviation in the welding temperature, regardless of whether the welding temperature deviation is high or low, as long as the resulting temperature is still between the melting point of the first polymer material and the melting point of the second polymer material, the manufactured products remain compliant and meet the required standards. Therefore, using the sheet of the present invention for welding can greatly reduce the negative influences of welding temperature deviations and welding time deviations on the product quality, thereby reducing air leakage issues of the inflatable products, improving the air tightness of the inflatable products, increasing the yield rate, reducing the production costs, and at the same time, simplifying the welding operation of technicians.

Moreover, as the substrate layer 206 is formed by converging the first polymer material in the flowable state and the second polymer material in the flowable state, no bubbles are formed between the first layer 208 and the second layer 210. Thus, the bonding strength between the first layer and the second layer is high, making them less prone to separation. In particular, the connection between the first layer 208 and the second layer 210 is formed in a materially bonded manner. The substrate layer 206 formed by converging the first and second polymer materials in the flowable state may further include an intermediate layer 212 between the first layer 208 and the second layer 210. The intermediate layer 212 includes a mixture of the first polymer material and the second polymer material to more firmly bond the first layer 208 and the second layer 210. Optionally, the substrate layer 206 may be formed by extrusion which will be described in detail below. In the context of the present invention, the term "flowable state" refers to state of the first or second polymer material in which the polymer is partially or completely molten or, in other words, the polymer is at least in parts or completely in an amorphous liquid state. In particular, the polymer material being in a flowable state has a temperature at or above its melting point. In preferred embodiments, the temperature of the polymer material in flowable state is about 5 K or more, preferably 10 K or more, above the melting point. Depending on the kind of polymer material, the temperature of the polymer material in flowable state is about 5 to 100 K, preferably 10 to 40 K, above the melting point.

The thickness of the substrate layer 206 including the first layer 208 and the second layer 210 may be approximately the same as that of a conventional substrate layer having only one layer of a single-temperature TPU film. Thus, the sheet 200 of the present invention still maintains the characteristics of thinness and lightweight. Further, compared with a substrate layer of a single-temperature TPU film, the substrate layer 206 including the first layer 208 and the second layer 210 which has lower requirements for welding operation and can withstand a wider range of welding temperature and time variations without affecting product quality, so that the substrate layer 206 including the first layer 208 and the second layer 210 can even be made thinner than the substrate layer of the single-temperature TPU film, thereby making the inflatable product made of the sheet 200 more lightweight.

The fabric layer 202 of the sheet 200 is made of fabric material. Optionally, the fabric material may be, but is not limited to, a flat fabric material or a three-dimensional fabric material, or only a number of fibers or threads. Optionally, the fabric material may be made of one or more types of fibers (e.g. natural fibers or chemical fibers), in particular one or more types of fibers having high tensile strength. Optionally, the one or more types of fibers are selected from the following materials: cotton fiber, wool fiber, silk fiber, hemp fiber, regenerated fiber, polyester fiber, polyamide fiber, polyacrylonitrile fiber, polyvinyl alcohol fiber, polypropylene fiber, polyurethane fiber, and inorganic fiber.

Optionally, the adhesive layer 204 of the sheet 200 may be formed of polyurethane adhesive including, but not limited to, solvent-based polyurethane (PU) adhesive, water-based polyurethane (PU) adhesive, PUR hot melt adhesive (also known as moisture-curing polyurethane reactive hot melt adhesive). The solvent-based PU adhesive has the advantages of high initial adhesion, high bonding degree in a short time, high peel strength, that is, a high resistance to peel-off of the surface film and so on. The water-based PU adhesive takes water as a carrier, which is more environmentally friendly. PUR hot melt adhesive has many advantages such as being solvent-free, water-resistant, heat-resistant, cold-resistant, creep-resistant and so on. It is to be appreciated that the adhesive layer 204 of the sheet 200 may also be formed of other suitable adhesive materials.

Optionally, the fabric layer 202 may be coated with a polyurethane coating on a side to be laminated to the adhesive layer 204 to enhance the bonding effect of the fabric layer 202 and the adhesive layer 204, thereby enhancing the bonding strength of the fabric layer 202 and the substrate layer 206. This is particularly advantageous in the case where the fabric material (for example, the fabric material made of polyamide fiber) of the fabric layer 202 itself is directly laminated to the adhesive material with a low bonding strength, and the fabric layer 202 and the substrate layer 206 can be prevented from being torn apart by an external force.

Optionally, the first polymer material and the second polymer material used to form the substrate layer 206 are thermoplastic polymer materials. Optionally, the first polymer material and the second polymer material may be composed of one or more of: thermoplastic polyurethane elastomer (TPU), polyethylene (PE), polypropylene (PP), polyvinyl chloride (PVC), polyvinylidene chloride (PVDC), and polyurethane (PU). Alternatively, the first polymer material and/or the second polymer material may only comprise one of said materials. The first polymer material and the second polymer material may be the same kind of material or different kinds of materials. For example, when the first polymer material and the second polymer material are of the same kind, the first polymer material and the second polymer material may both be one of thermoplastic polyurethane elastomer, polyethylene, polypropylene, polyvinyl chloride, polyvinylidene chloride, and polyester. In some embodiments, the first polymer material and the second polymer material may both be thermoplastic polyurethane elastomers. Optionally, the melting point of the first polymer material is at least 15°C higher than that of the second polymer material to more reliably guarantee the strength of the welding while avoiding air leakage due to damage of the sheet 200 during the welding operation. In another embodiment, the melting point of the first polymer material is at least 17°C higher, preferably at least 20°C or higher. A melting point difference between the first polymer material and the second polymer material may be smaller than 50°C, preferably 30°C. Optionally, according to one non-limiting example, the melting point of the first polymer material is in the range of about 140°C to 150°C, and the melting point of the second polymer material is in the range of about 120°C to 130°C.

The term "melting point" as used in the present invention refers to the melting temperature. The melting point is determined using Differential Scanning Calorimetry (DSC) according to ISO 11357-3:2018 applying a heating rate of 10 K/min. Relevant definitions and testing methods are found in ISO 11357-1. To perform the test, the sample is placed into the instrument, and the instrument heats up at the heating rate of 10 K/min. During the endothermic melting process of the sample, the instrument displays a heating curve. For the polymer material, the melting peaking temperature, denoted as T_{p,m} in the ISO 11357-3 standard, is used as the "melting point" of the polymer materials. Thus, in the present invention, melting point peak temperatures T_{p,m} of two materials are compared. When a range is given, melting point peak temperature T_{p,m} of the first and the second polymer material are taken to compare whether the difference of the melting points of the first and second polymer material is at least 15°C, preferably at least 17°C, more preferably at least 20°C. For example, the melting point of the first polymer material is about 150°C, and the melting point of the second polymer material is about 130°C.

Optionally, the first layer 208 of the substrate layer 206 has a Shore A hardness ranging from 80 HA to 98 HA, and the second layer 210 has a Shore A hardness ranging from 75 HA to 95 HA. In other words, the Shore A hardness of the first layer 208 may be higher than the Shore A hardness of the second layer 210, preferably by 5 HA, more preferably by 10 HA. The Shore A hardness ranges may be compared by comparing both lower bounds, both upper bounds or both median of the intervals to each other. Thus, the sheet 200 achieves a suitable balance between softness and hardness, so as to prevent the uncomfortable touch of the sheet 200 caused by excessive hardness and increased vulnerability to wrinkling and damage on the exterior surface once formed into an inflatable product, and also to prevent the sheet 200 from being overly soft, which would complicate the manufacturing process (for example, causing the sheet or the semi-finished product of the sheet in the sheet manufacturing process to be difficult to flatten). An excessive hardness may refer to a Shore A hardness higher than 98. Overly soft may be a Shore A hardness lower than 75. The measurement of the Shore hardness for plastics is conducted according to ISO 868. The standard specifies composition and specifications of the testing instrument. Under defined testing conditions, a specified-shaped durometer is pressed into the test material, and the depth of penetration is measured vertically. The numerical value displayed at this point is the Shore hardness value.

Optionally, when the sheet 200 is used to manufacture the inflatable pad, the thickness of the substrate layer 206 of the sheet 200 ranges from 0.01 mm to 0.4 mm, preferably from 0.05 mm to 0.25 mm. Optionally, when the sheet 200 is used to manufacture other inflatable products or non-inflatable products, the thickness of the substrate layer 206 of the sheet 200 may range from 0.01 mm to 2 mm.

Optionally, the ratio of the thickness of the first layer 208 to the thickness of the second layer 210 of the substrate layer 206 ranges from 1 : 1 to 1 : 4. In particular, a ratio of 1 : 2 or 1 : 3 may be used. In other words, the thickness of the second layer 210 may be equal to or larger than the thickness of the first layer 208. Preferably, the thickness of the second layer 210 is larger than the thickness of the first layer 208. In this way, the thickness ratio of the first layer 208 to the second layer 210 of the substrate layer 206 is appropriate. In one aspect, the degradation of the weldability of the sheet 200 due to the excessive ratio of the first layer 208 (in other words, the ratio of the second layer 210 is too small) can be prevented. For example, in the case of making an inflatable pad 100 using the sheet 200, damage of the inflatable pad 100 due to the insufficient strength of the welding between the top sheet 102 and the bottom sheet 104 made of the sheet 200, or the welding between each of the top and bottom sheets 102, 104 and other components in the inflatable chamber can be prevented. In another aspect, it helps to avoid an excessive ratio of the second layer 210 relative to the first layer 208. The selected ratio prevents, during the welding process, if the welding temperature and time are not well-controlled, that the second layer 210 completely melts and subsequently affects the first layer 208, leading to its melting and damage. For example, in the case of using the sheet 200 to manufacture inflatable pads 100, the selected ratio helps to prevent damage and air leaks in the inflatable pads 100, thereby improving the yield rate of the inflatable pads 100. Preferably, the ratio of the thickness of the first layer 208 to the thickness of the second layer 210 of the substrate layer 206 is about 1 : 2. Optionally, in some embodiments, the first layer 208 of the substrate layer 206 has a thickness of not less than 0.02 mm, and the second layer 210 of the substrate layer 206 has a thickness of not less than 0.04 mm.

Referring back to Figs. 1 to 11, the following will continue to describe a plurality of exemplary embodiments of an inflatable pad according to the present invention.

Figs. 1 to 3B show a first embodiment of an inflatable pad according to the present invention. Referring to Fig. 2 in connection with Fig. 3A, the illustrated inflatable pad 100 includes a connecting sheet 108 in addition to the top sheet 102 and the bottom sheet 104 described above. The connecting sheet 108 is disposed between the top sheet 102 and the bottom sheet 104 within the inflatable chamber 106. Optionally, the connecting sheet 108 may be made of thermoplastic polyurethane elastomer (TPU), polyvinyl chloride (PVC), polyurethane (PU), or other suitable polymer materials. The connecting sheet 108 includes a plurality of first welding regions 110 and a plurality of second welding regions 112 that may be evenly distributed. Further, the plurality of first welding regions 110 and the plurality of second welding regions 112 may be staggered from each other. In other words, in a vertical cross sectional cut as of Fig. 3A, the first welding regions 110 and the second welding regions 112 do not overlap with each other in their location. The plurality of first welding regions 110 are welded to the inner side of the top sheet 102, and the plurality of second welding regions 112 are welded to the inner side of the bottom sheet 104. In other words, a plurality of welding joints of the connecting sheet 108 and the top sheet 102 and a plurality of welding joints of the connecting sheet 108 and the bottom sheet 104 may be staggered from each other. Staggering the welding joints may avoid insufficient welding strength which may be caused by multiple welds at the same location of the connecting sheet 108.

The inflatable pad 100 may also include at least one thermal insulation sheet 114 disposed within the inflatable chamber 106. In the illustrated embodiment, the inflatable pad 100 includes two thermal insulation sheets, namely a first thermal insulation sheet 114a and a second thermal insulation sheet 114b (also collectively referred to herein as thermal insulation sheet 114). The first thermal insulation sheet 114a is disposed between the top sheet 102 and the connecting sheet 108 in the inflatable chamber 106, and the second thermal insulation sheet 114b is disposed between the connecting sheet 108 and the bottom sheet 104 in the inflatable chamber 106. It is to be appreciated that, in further embodiments, no thermal insulation sheet or two or more thermal insulation sheets may be provided between the top sheet 102 and the connecting sheet 108, and no thermal insulation sheet or two or more thermal insulation sheets may be provided between the bottom sheet 104 and the connecting sheet 108.

The thermal insulation sheet 114 may include a polymer substrate 116 and a metal coating layer 118 applied to at least one of the two opposite sides of the polymer substrate 116. In the illustrated non-limiting embodiment, the thermal insulation sheet 114 includes a polymer substrate 116 and two metal coating layers 118 applied to the two opposite sides of the polymer substrate 116, respectively. In further embodiments, the thermal insulation sheet may include a metal coating layer on only one of the two opposite sides of the polymer substrate. The polymer substrate 116 of the thermal insulation sheet 114 may be formed of a suitable polymer material such as polyvinyl chloride (PVC), polypropylene (PP), polyethylene terephthalate (PET), and the metal coating layer 118 of the thermal insulation sheet 114 may be formed of a suitable metal material such as aluminum, zinc, copper, silver, or gold. Further optionally, the polymer substrate 116 of the thermal insulation sheet 114 is formed of polyethylene terephthalate (PET) and the metal coating layer 118 of the thermal insulation sheet 114 is formed of aluminum.

To facilitate the welding of the top sheet 102 and the connecting sheet 108, the first thermal insulation sheet 114a includes a plurality of first openings 120a. The first openings 120a may be evenly distributed. The first openings 120a may provide an opening to connect neighboring cavities which is small compared to the area of the thermal insulation sheet 114a, which separates said cavities. Thereby, air transfer, and thereby, heat transfer between said neighboring cavities is reduced. Each first opening 120a is configured to allow a corresponding one of the first welding regions 110 of the connecting sheet 108 to make contact with and be welded to the inside of the top sheet 102. To facilitate the welding of the connecting sheet 108 and the bottom sheet 104, the second thermal insulation sheet 114b includes a plurality of second openings 120b. The second openings 120b may be evenly distributed. The second openings 120b provide an opening to connect neighboring cavities which is small compared to the area of the thermal insulation sheet 114b, which separates said cavities. Thereby, air transfer, and thereby, heat transfer between said neighboring cavities is reduced. Each second opening 120b is configured to allow a corresponding one of the second welding regions 112 of the connecting sheet 108 to make contact with and be welded to the inside of the bottom sheet 104. Thus, the plurality of first welding regions 110 of the connecting sheet 108 can make contact with and be welded to the top sheet 102 via the plurality of first openings 120a, and the plurality of second welding regions 112 of the connecting sheet 108 can make contact with and be welded to the bottom sheet 104 via the plurality of second openings 120b.

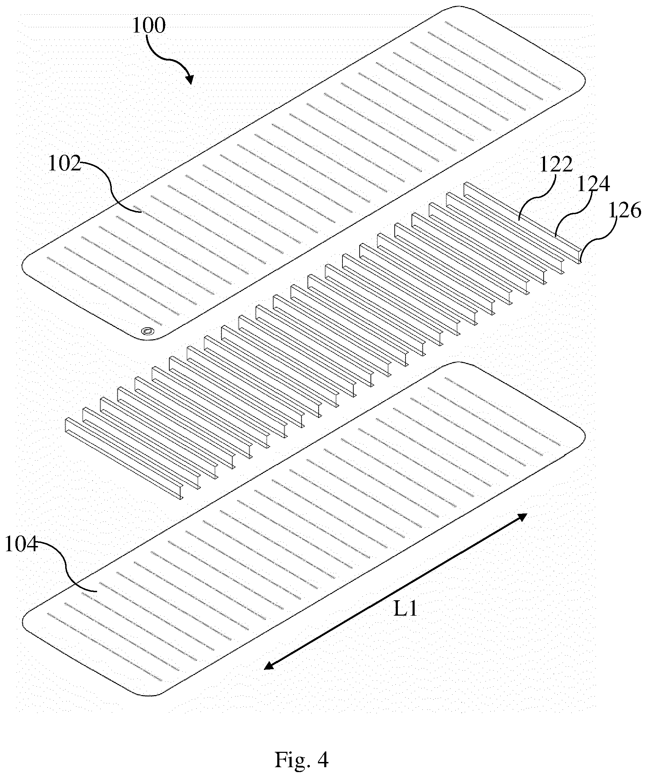

Fig. 4 shows a schematic exploded view a second embodiment of an inflatable pad 100 according to the present invention. All explanations above apply accordingly, unless they contradict newly mentioned features of this embodiment. Referring to Fig. 4, the inflatable pad 100 in Fig. 4 includes a plurality of tensioning members 122 in addition to the top sheet 102 and the bottom sheet 104 described above. The plurality of tensioning members 122 are disposed in the inflatable chamber and spaced apart along a longitudinal direction L1 of the inflatable pad 100. The arrangement of the tensioning members 122 may be regular or irregular. At least one of the tensioning members 122 may have a reduced length compared to another tensioning member 122. It is to be appreciated that, in further embodiments, the plurality of tensioning members 122 may also be spaced apart along a transverse direction perpendicular to the longitudinal direction of the inflatable pad 100. Further alternatively, the plurality of tensioning members 122 may also be spaced apart along an angled direction, i.e. a direction neither perpendicular to the vertical nor to the longitudinal direction of the inflatable pad 100. In the illustrated non-limiting embodiment, each tensioning member 122 is in a sheet shape, and a top edge 124 and a bottom edge 126 of each tensioning member 122 are connected to the top sheet 102 and the bottom sheet 104, respectively, for example be by welding, such that the inflatable pad 100 maintains a predetermined shape while in the inflated state. Optionally, the tensioning member 122 may be made of a suitable polymer material such as polyvinyl chloride (PVC), polyurethane (PU), thermoplastic polyurethane elastomer (TPU). The tensioning member 122 may also be made of polyamide fiber (also referred to as nylon fiber) or polyethylene terephthalate fiber (PET fiber). The tensioning member 122 may also be made of the aforementioned sheet 200 or the substrate layer 206 of the aforementioned sheet 200.

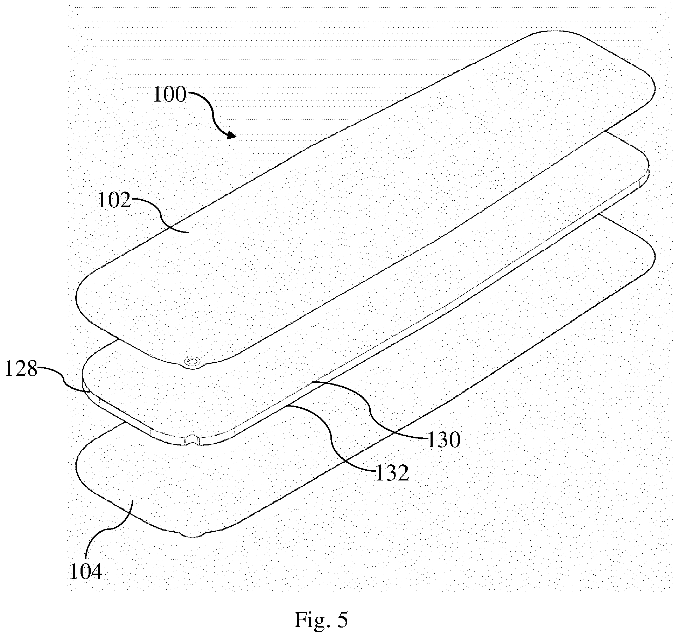

Fig. 5 shows a schematic exploded view of a third embodiment of an inflatable pad 100 according to the present invention. All explanations above apply accordingly, unless they contradict newly mentioned features of this embodiment. Referring to Fig. 5, the inflatable pad 100 in Fig. 5 includes a foam core 128 in addition to the top sheet 102 and the bottom sheet 104 described above. The foam core 128 is disposed within the inflatable chamber and the top sheet 102 and/or the bottom sheet 104 may be laminated to a top surface 130 and a bottom surface 132 of the foam core 128, respectively. Optionally, the top sheet 102 and the bottom sheet 104 may be laminated to the top surface 130 and the bottom surface 132 of the foam core 128 by hot pressing or gluing.

The foam core 128 may be compressed under an external force and restored to its original shape after the external force is removed. The foam core 128 may, for example, be made of a lightweight and resilient open-cell foam material. The shape and volume of the foam core 128 may substantially match the shape and volume of the inflatable chamber of the inflatable pad 100 in the inflated state. Alternatively, the foam core may only partially match the shape and/or volume of the inflatable chamber of the inflatable pad 100 in the inflated state. The inflatable pad 100 thus constructed allows the inflatable pad 100 to be rolled and/or folded into a relatively compact shape to exhaust the gas in the inflatable chamber. The compact shape may be a roll or a box-like shape. After compaction, an inflation valve of the inflatable pad 100 may be closed so that the inflatable pad 100 can be stored in a small volume. While in use, the inflation valve may be opened and the foam core 128 will apply an expansion force to deploy the inflatable pad 100 while drawing air into the inflatable chamber of the inflatable pad 100. In other words, by incorporating the foam core 128, the inflatable pad 100 may be self-inflatable. It is to be understood that the inflatable pad 100 may also be inflated by blowing air into it or by using an airbag or an air pump. Optionally, the foam core 128 may only fill a portion of the inflatable pad 100. Preferably, the foam core 128 may fill at least one fourth of the cavity of the inflatable pad 100. More preferably, the foam core 128 may fill half of the cavity of the inflatable pad 100. Even more preferably, the foam core 128 may fill three fourth of the cavity of the inflatable pad 100. Optionally, the filling is distributed evenly.

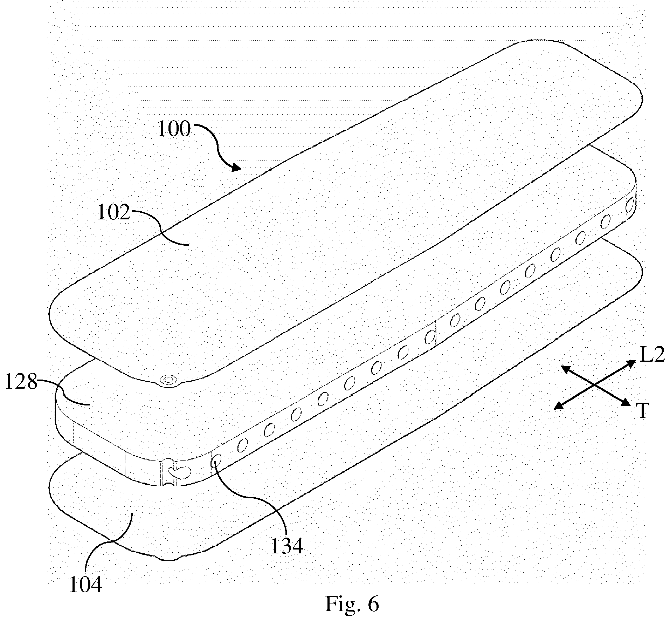

Fig. 6 shows a schematic exploded view of a fourth embodiment of an inflatable pad according to the present invention. All explanations above apply accordingly, unless they contradict newly mentioned features of this embodiment. The inflatable pad in Fig. 6 is similar to the inflatable pad in Fig. 5, except that the foam core 128 of the inflatable pad 100 in Fig. 6 includes a plurality of apertures 134. The apertures 134 may extend in a transverse direction T of the foam core 128. The apertures 134 may be uniformly distributed. In the non-limiting embodiment shown in Fig. 6, the plurality of apertures 134 penetrate the foam core 128 in the transverse direction T of the foam core 128 and are evenly spaced apart in a longitudinal direction L2 of the foam core 128. In the non-limiting embodiment shown in Fig. 6, the cross-section of each aperture 134 has a circular shape. It is to be appreciated that, in further embodiments, the plurality of apertures may be blind apertures extending in the transverse direction of the foam core; in still further embodiments, the plurality of apertures may also be through-holes or blind holes extending in the longitudinal direction of the foam core; and in still further embodiments, the cross-section of the apertures may also have other suitable shapes such as an oval shape or a polygonal shape. The diameter of an aperture 134 may be between 20% and 80% of the thickness of the foam core 128 in a thickness direction. Preferably, the diameter may be between 30% and 70%. Most preferably, the diameter may be between 45% and 60%.

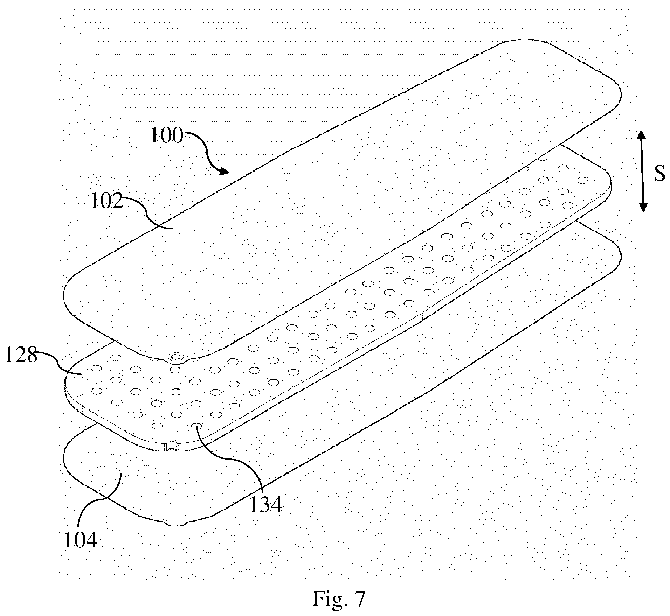

Fig. 7 shows a schematic exploded view of a fifth embodiment of an inflatable pad 100 according to the present invention. All explanations above apply accordingly, unless they contradict newly mentioned features of this embodiment. The inflatable pad 100 in Fig. 7 is similar to the inflatable pad in Fig. 5, except that the foam core 128 of the inflatable pad 100 in Fig. 7 includes a plurality of apertures 134 that extend in a thickness direction S of the foam core 128. The apertures 134 may be uniformly distributed. In the non-limiting example shown in Fig. 7, the plurality of apertures 134 penetrate the foam core 128 along the thickness direction S of the foam core 128 and are uniformly distributed in the foam core 128 in an array pattern. In the embodiment shown in Fig. 7, the cross-section of each aperture 134 has a circular shape. It is to be appreciated that, in further embodiments, the plurality of apertures may be blind apertures extending in the thickness direction of the foam core; and in still further embodiments, the cross-section of the apertures may also have other suitable shapes such as an oval shape or a polygonal shape. The diameter of an aperture 134 may be between 20% and 200% of the thickness of the foam core 128 in thickness direction S. Preferably, the diameter may be between 50% and 150%. Most preferably, the diameter may be between 80% and 120%.

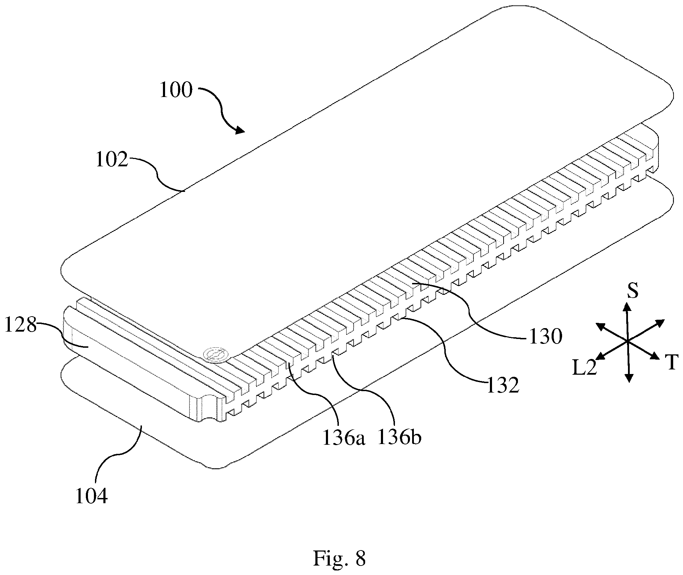

Fig. 8 shows a schematic exploded view of a sixth embodiment of an inflatable pad according to the present invention. All explanations above apply accordingly, unless they contradict newly mentioned features of this embodiment. The inflatable pad in Fig. 8 is similar to the inflatable pad in Fig. 5, except that the foam core 128 of the inflatable pad 100 in Fig. 8 includes a plurality of uniformly distributed grooves 136a and 136b. The plurality of grooves may be a plurality of first grooves 136a recessed with respect to the top surface 130 of the foam core 128 and/or a plurality of second grooves 136b recessed with respect to the bottom surface 132 of the foam core 128. In the non-limiting embodiment shown in Fig. 8, the plurality of first grooves 136a extend in the transverse direction T of the foam core 128 and are spaced apart in the longitudinal direction L2 of the foam core 128. Preferably, they may be evenly spaced apart. The plurality of second grooves 136b extend in the transverse direction T of the foam core 128 and are spaced apart in the longitudinal direction L2 of the foam core 128. At least one of the first grooves 136a is aligned with a corresponding one of the second grooves 136b in the thickness direction S of the foam core 128. Optionally, each of the first grooves 136a is aligned with a corresponding one of the second grooves 136b in the thickness direction S of the foam core 128. The extension of a groove 136a, 136b may be between 20% and 80% of the thickness of the foam core 128 in the thickness direction S. Preferably, the extension may be between 30% and 70%. Most preferably, the extension may be between 45% and 60%. As already indicated above, the distribution of the grooves 136a, 136b and/or the extension of the grooves 136a, 136b may be such that the inflatable pad 100 is strengthened in certain regions. Such regions may be the head-region and/or the central-region.

It is to be appreciated that, in further embodiments, the first grooves may also not be aligned with the second grooves in the thickness direction of the foam core; in still further embodiments, the foam core may be provided with only a plurality of grooves recessed with respect to its top surface or with only a plurality of grooves recessed with respect to its bottom surface; and in still further non-limiting embodiments, the plurality of grooves may extend in the longitudinal direction L2 of the foam core.

By incorporating a plurality of apertures or a plurality of grooves, the weight of the inflatable pad may be reduced without significantly altering its volume, making the inflatable pad more portable; and alternatively, if the weight of the inflatable pad remains relatively unchanged, increasing its thickness can offer users more comfortable support. In addition, the foam core with apertures and grooves, after being made into an inflatable pad, may impart patterns on the surface of the inflatable pad, enhancing the visual appeal of the inflatable pad. Patterns imparted by a foam core may be largely different of patterns formable by an inflatable product without a foam core, thereby increasing the diversity of patterns and/or shapes of the inflatable products.

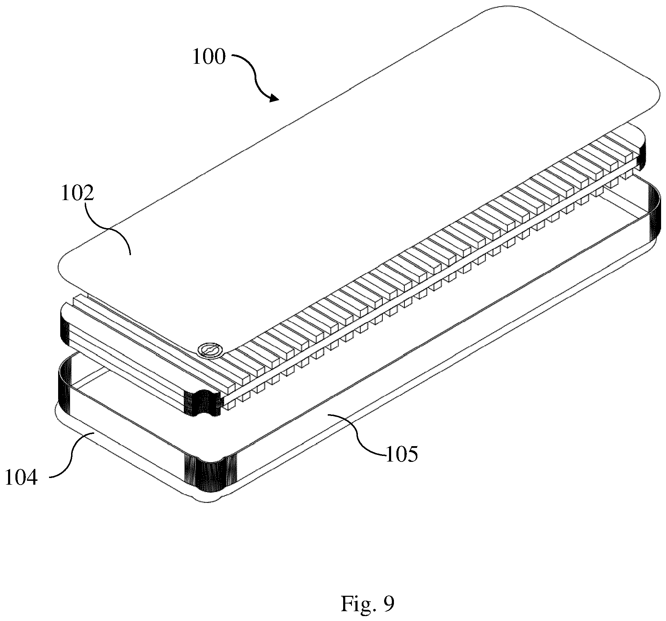

Fig. 9 shows a schematic exploded view of a seventh embodiment of an inflatable pad according to the present invention. All explanations above apply accordingly, unless they contradict newly mentioned features of this embodiment. The inflatable pad in Fig. 9 is similar to the inflatable pad in Fig. 8, except that the inflatable pad 100 of Fig. 9 includes a top sheet 102, a bottom sheet 104, and a lateral sheet 105. The periphery of the top sheet 102 is connected to the periphery of the bottom sheet 104 by means of the lateral sheet 105, such that the top sheet 102, the bottom sheet 104, and the lateral sheet 105 jointly define the inflatable chamber. In the illustrated non-limiting embodiment, the periphery of the top sheet 102 is welded to a top edge of the lateral sheet 105, and the periphery of the bottom sheet 104 is welded to a bottom edge of the lateral sheet 105. The lateral sheet 105 may have an extension in thickness direction of the foam core which is equal to the heights of the foam core. Then, the inflatable pad 100 may have a rectangular cross-sectional shape. Alternatively, the extension in thickness direction may be smaller than the heights of the foam core. Then, the inflatable pad 100 may have a rectangular cross-sectional shape with rounded edges. Alternatively, the extension in thickness direction of the foam core is larger than the heights of the foam core. Then, the inflatable pad 100 may have a concave cross-sectional shape on at least one side. This may be beneficial for keeping a person in the middle of the inflatable pad during sleep. It is to be understood that the lateral sheet of the seventh embodiment may be disposed in the same manner in other embodiments of the inflatable pad as mentioned throughout this description.

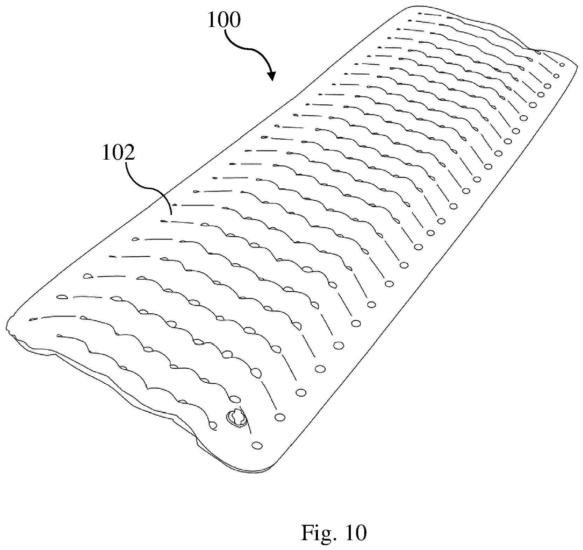

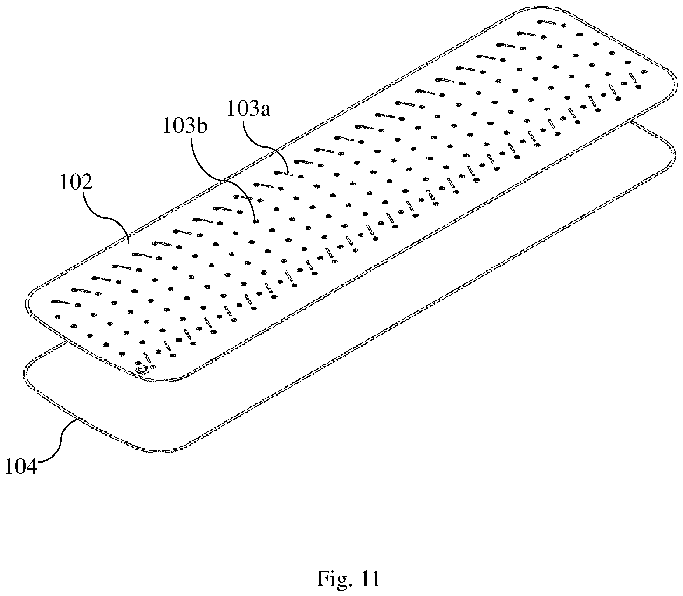

Figs. 10 and 11 show an eighth embodiment of an inflatable pad according to the present invention. All explanations above apply accordingly, unless they contradict newly mentioned features of this embodiment. The non-limiting example of the inflatable pad in Figs. 10 and 11 mainly differs from the inflatable pad in Figs. 1 and 2 in that no other components are provided in the inflatable chamber defined by the top sheet 102 and the bottom sheet 104 of the inflatable pad 100 in Figs. 10 and 11. Further, the top sheet 102 may be directly welded to the bottom sheet 104 at a plurality of weld lines 103a and a plurality of weld points 103b which are distributed, such that the inflatable pad 100 maintains a predetermined shape in the inflated state. Preferably, they are uniformly distributed.

It should be understood that the embodiments shown in Figs. 1 to 11 only show the shapes, dimensions and arrangements of the various optional components of the inflatable pad according to the present invention, which, however, are only illustrative and not limiting, and other shapes, dimensions and arrangements may be employed without departing from the spirit and scope of the present invention.

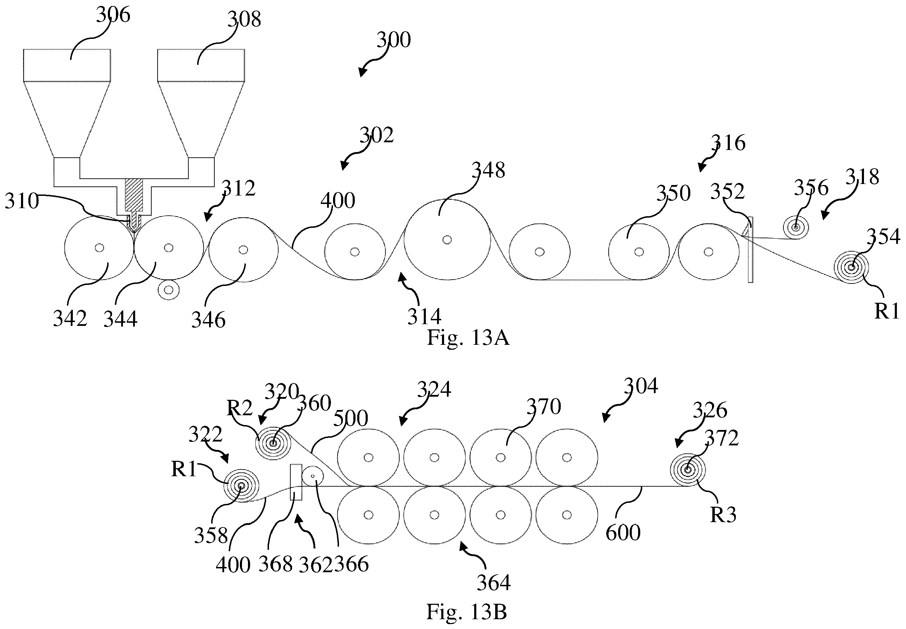

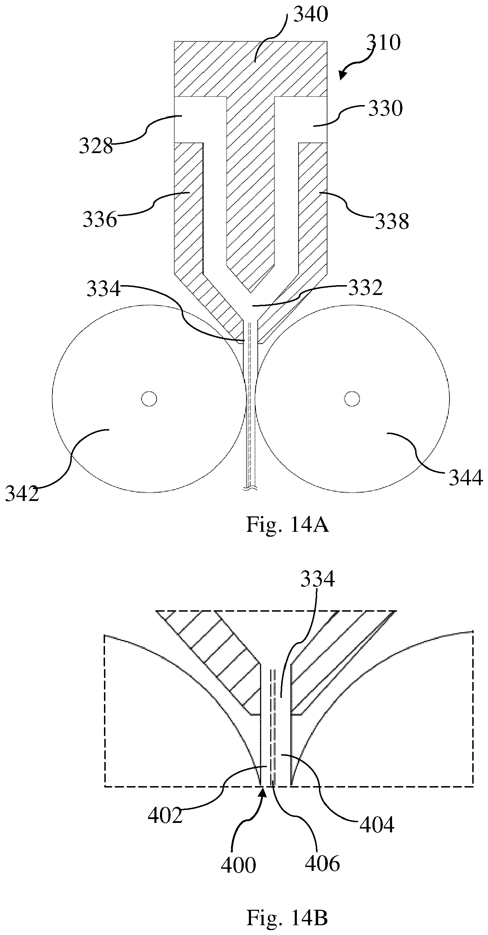

Figs. 13A to 13B show schematic diagrams of a first embodiment of a sheet manufacturing apparatus according to the present invention, which may be used to manufacture the sheet 200 shown in Fig. 12. Fig. 14A is an enlarged partial cross-sectional schematic view of the first portion of the sheet manufacturing apparatus in Fig. 13A and Fig. 14B is an even further enlarged partial cross-sectional schematic view of the material outlet 334 of Fig. 14A.

Firstly, referring to Figs. 13A and 13B, in the illustrated embodiment, the sheet manufacturing apparatus 300 may include a first portion 302 and a second portion 304 separated from each other. The first portion 302 may include: a first feeding device 306, a second feeding device 308, an extrusion device 310, a pressing device 312, a cooling device 314, a trimming device 316, and a first winding device 318. The second portion 304 may include: a third feeding device 320, an unwinding device 322, a lamination device 324, and a second winding device 326.

In the first portion 302 of the sheet manufacturing apparatus 300, the first feeding device 306 is in communication with the extrusion device 310 and may supply a first polymer material in a flowable state to the extrusion device 310; and the second feeding device 308 is in communication with the extrusion device 310 and may supply a second polymer material in a flowable state to the extrusion device 310. The first and second feeding devices 306, 308 may be of equal size or the size may be adopted to the ratio of thickness of the first layer to the second layer. The melting point of the first polymer material is higher than the melting point of the second polymer material. The first feeding device 306 and the second feeding device 308 may have heating assemblies to heat the first and second polymer materials in a solid state to a molten state, respectively, thereby making the first polymer material and the second polymer material flowable. Optionally, the first feeding device 306 and/or the second feeding device 308 may have a screw conveying mechanism that enables the material to be sufficiently plasticized and evenly mixed and spirally transported along an axial direction of the screw by means of the pressure and shear force generated by the rotation of the screw. It is to be understood that those skilled in the art may employ other forms of conveying mechanisms according to actual needs. As an example, although not limited to it, the first feeding device 306 and/or the second feeding device 308 may have a gear pump conveying mechanism.

Referring to Figs. 14A and 14B, wherein the previous descriptions apply accordingly, subsequently, the first polymer material and the flowing second polymer material in the flowable state converge in the extrusion device 310. The extrusion device 310 includes a first flow channel 328, a second flow channel 330, a converging chamber 332, and a material outlet 334. Each of the first flow channel 328, the second flow channel 330, and the material outlet 334 is in communication with the converging chamber 332. The first flow channel 328 and the second flow channel 330 are configured for delivering the first polymer material in the flowable state and the second polymer material in the flowable state, respectively, into the converging chamber 332 The first and second polymer materials in the flowable state are adapted to converge within the converging chamber 332. Subsequently, the converged first and second polymer materials are extruded from the material outlet 334 to form a first material sheet 400.

Specifically, the first polymer material in the flowable state from the first feeding device 306 flows into the first flow channel 328 through an inlet of the first flow channel 328 and flows into the converging chamber 332 through the first flow channel 328, and the second polymer material in the flowable state from the second feeding device 308 flows into the second flow channel 330 through an inlet of the second flow channel 330 and flows into the converging chamber 332 through the second flow channel 330. Next, the first and second polymer materials in the flowable state converge in the converging chamber 332, and the converged materials will enter the material outlet 334 from the converging chamber 332 and be extruded from the material outlet 334 to form the first material sheet 400, the first material sheet 400 including a first layer 402 formed of the first polymer material and a second layer 404 formed of the second polymer material.

The first polymer material in the flowable state from the first flow channel 328 and the second polymer material in the flowable state from the second flow channel 330 may be at least partially mixed in the converging chamber 332 such that the first material sheet 400 includes: the first layer 402 formed of the first polymer material, the second layer 404 formed of the second polymer material, and an intermediate layer 406 formed of a mixture of the first polymer material and the second polymer material. The first and second polymer material may be completely mixed at their interface such that a continuous intermediate layer is present between the first and second polymer material. The intermediate layer 406 of the first material sheet 400 is located between the first layer 402 and the second layer 404 and makes the first layer 402 and the second layer 404 to be more firmly bonded. It should be understood that there may be no obvious interface between the first layer 402 and the intermediate layer 406 of the first material sheet 400 and between the second layer 404 and the intermediate layer 406.

Referring to Fig. 14A, the extrusion device 310 may be assembled from at least a first component 336, a second component 338, and a third component 340. The first component 336 and the third component 340 may define one or more first flow channels 328 in communication with the converging chamber 332. E.g., the first component 336 and the third component 340 may abut each other, and at least one of the first component 336 and the third component 340 is provided with one or more recesses in an area of contact, thereby forming the aforementioned one or more first flow channels 328. Similarly, the second component 338 and the third component 340 may define one or more second flow channels 330 in communication with the converging chamber 332. E.g., the second component 338 and the third component 340 may abut each other, and at least one of the second component 338 and the third component 340 is provided with one or more recesses in an area of contact, thereby forming the aforementioned one or more second flow channels 330. The material outlet 334 of the extrusion device 310 may be defined by at least the first component 336 and the second component 338 and is in the form of a slot. The size of the material outlet 334 defines the size of the first material sheet 400 extruded from the material outlet 334.

For adjusting the ratio between the first and the second polymer material, the protruding portion of the third component 340, facing the material outlet 334, may be shaped symmetrical, thereby being adapted to form equal first and second flow channels 328, 330 which may result in a 1 : 1 ratio between the first and second layers 402, 404 of the first material sheet 400. Alternatively, the protruding portion of the third component 340, facing the material outlet 334, may be shaped unsymmetrical, thereby being adapted to form unequal first and second flow channels 328, 330 which may result in ratio different from 1 : 1, like 1 : 2, 1: 3 or 1 : 4, between the first and second layers 402, 404 of the first material sheet 400. Further alternatively, the shape of the third component 340 may be symmetrical, as mentioned above, and the ratio may be set by varying the pressure in the flow channels.

Referring to Figs. 13A and 13B, the first material sheet 400 delivered from the material outlet 334 is then conveyed to the pressing device 312. The pressing device 312 is configured to press the first material sheet 400 delivered from the material outlet 334. The pressing may include flattening and/or embossing, such as flattening only, flattening and then embossing, or embossing only. In the illustrated non-limiting embodiment, the pressing device 312 may include a first roller 342 and a second roller 344 adjacent to the material outlet 334 and a third roller 346 downstream of the first roller 342 and the second roller 344 in a conveying direction of the first material sheet 400. The first material sheet 400 delivered from the material outlet 334 first enters between the first roller 342 and the second roller 344 and then travels to the third roller 346. Optionally, in an embodiment in which the first material sheet 400 is embossed by the pressing device 312, embossing may be implemented, for example, by arranging one of the first roller 342, the second roller 344, and the third roller 346 as an embossing roller. By embossing the first material sheet 400, it is possible to avoid the problem that after the processed (e.g., cooled and trimmed) first material sheet 400 is subsequently rolled into a first material sheet roll R1 using the first winding device 318, adjacent layers of first material sheet in the first material sheet roll R1 stick or adhere to each other, resulting in difficulties in the subsequent unwinding of the first material sheet roll R1. Optionally, the pressing device 312 may also include a heating assembly to heat the first roller 342, the second roller 344, and the third roller 346, thereby preventing the first material sheet 400 delivered from the material outlet 334, which is still at a high temperature, from rapidly cooling after entering the pressing device 312, resulting in defects and difficulty in flattening and/or embossing of the first material sheet 400. Optionally, the first and second rollers 342 and 344 may be heated to a temperature below the temperature of the first material sheet 400 delivered from the material outlet 334, and the third roller 346 may be heated to a temperature below the temperature of the first and second rollers 342 and 344, allowing the first material sheet 400 to undergo preliminary cooling while being pressed.

The pressed first material sheet 400 may be fed into the cooling device 314 for complete cooling. The cooling device 314 may include a plurality of cooling rollers 348 to cool and solidify the first material sheet 400 for subsequent lamination with the fabric piece 500. The first material sheet 400 may be cooled completely, preferably to ambient temperature. The cooling device 314 may include a cooling assembly that conveys a low-temperature cooling medium into the cooling rollers 348 to cool the cooling rollers 348 to keep them at a low temperature. The temperature of the cooling medium may be below ambient temperature. Meanwhile, the cooling assembly recovers the heated cooling medium from the cooling rollers and cools the heated cooling medium, and then conveys the low-temperature cooling medium back into the cooling rollers 348 in a continuous cycle. The cooling medium may be gas or liquid. The cooling medium may be a medium such as water or oil.

The cooled first material sheet 400 may be fed into the trimming device 316 for trimming. The trimming device 316 may include a plurality of conveying rollers 350 and a cutting tool 352 to trim the first material sheet 400 into a predetermined width. The cutting tool 352 may be for example a cutting knife, a laser cutting head, or the like. The width of the trimmed first material sheet 400 may be substantially equal to the width of a fabric piece 500 to be laminated thereto, so that the trimmed first material sheet 400 can be laminated to the fabric piece 500 to obtain a finished sheet without further cutting or only a small amount of cutting of the resulting second material sheet 600. The first winding device 318 may include a first winding roller 354 and a second winding roller 356. The first winding roller 354 is used for winding the trimmed first material sheet 400 to form the first material sheet roll R1 for the subsequent lamination process. The second winding roller 356 is used for winding the offcuts generated from the trimming process.

The first material sheet roll R1 is then fed into the second portion 304 of the sheet manufacturing apparatus 300. The first material sheet roll R1 may be unrolled by the unwinding device 322 to provide the trimmed first material sheet 400 to the lamination device 324 while the third feeding device 320 provides the fabric piece 500 to the lamination device 324. The lamination device 324 is configured to apply an adhesive material onto the fabric piece 500 or the first layer 402 of the first material sheet 400, and to laminate the fabric piece 500 to the first material sheet 400 through the adhesive material to form the second material sheet 600.

In the illustrated embodiment, the unwinding device 322 includes an unwinding roller 358. In the illustrated embodiment, the lamination device 324 includes a coating unit 362 and a lamination unit 364. Herein, the coating unit 362 may include a coating roller 366 and a coating thickness control assembly 368. The trimmed first material sheet 400 may be delivered from the unwinding roller 358 into the coating unit 362, specifically beneath the coating roller 366, such that the first layer 402 of the trimmed first material sheet 400 faces the coating roller 366. The adhesive material may be first applied from above between the coating roller 366 and the coating thickness control assembly 368 and then applied to the trimmed first material sheet 400 via the coating roller 366. The thickness of the adhesive material attached to the coating roller 366 may be adjusted by adjusting the size of the gap between the coating thickness control assembly 368 and the coating roller 366, thereby controlling the thickness of the adhesive material applied to the trimmed first material sheet 400 by the coating roller 366. Such a coating unit 362 is adapted to apply, for example, a PUR hot melt adhesive onto the trimmed first material sheet 400. In the case where the adhesive material is a PUR hot melt adhesive, the coating unit 362 may also include a heating assembly to heat the solid PUR hot melt adhesive to a molten state, and then apply the molten/flowable PUR hot melt adhesive to the trimmed first material sheet 400. In the non-limiting illustrated embodiment, the trimmed first material sheet 400 is fed into the coating unit 362 for adhesive application; and it is to be appreciated that, in further embodiments, the fabric piece 500 may be fed into the coating unit 362 for adhesive application and then laminated to the trimmed first material sheet 400.

In the non-limiting illustrated embodiment, the third feeding device 320 includes an unwinding roller 360 and the lamination unit 364 includes multiple pairs of oppositely disposed lamination rollers 370. A fabric roll R2 may be unwound by the unwinding roller 360 to feed the fabric piece 500 between the oppositely disposed lamination rollers 370, while the first material sheet 400 onto which the adhesive material has been applied is also fed between the opposing lamination rollers 370 such that the first material sheet 400 and the fabric piece 500 are laminated together by the adhesive material, for example under pressure, to form the second material sheet 600. The second material sheet 600 includes a fabric layer formed of the fabric piece 500, an adhesive layer formed of the adhesive material, and a substrate layer formed of the first material sheet 400, the fabric layer being laminated to the substrate layer through the adhesive layer.

The laminated second material sheet 600 may be directly used as a finished sheet 200 without subsequent treatment, and is wound into a finished sheet roll R3 by the winding roller 372 of the second winding device 326. It is to be appreciated that, in further embodiments, the laminated second material sheet 600 may be subjected to subsequent processing such as shaping and cleaning according to actual needs to form the finished sheet 200.

Optionally, before the fabric piece 500 is fed to the lamination device 324, the side of the fabric piece 500 to be bonded to the first material sheet 400 may be coated with a polyurethane coating, and then the fabric piece 500 coated with the polyurethane coating may be laminated to the first material sheet 400 by the adhesive material so as to enhance the bonding effect of the fabric piece 500 to the adhesive material, thereby enhancing the bonding strength of the fabric piece 500 to the first material sheet 400. It is to be understood that this can also be applied to other embodiments of the sheet manufacturing apparatus and sheet manufacturing method of the present invention. Optionally, a polyurethane mixture may be formed by mixing polyurethane resin and crosslinker in a ratio of, for example, approximately 100 : 2. The polyurethane mixture is then applied onto the surface of fabric piece 500, followed by drying in an oven, to form a polyurethane coating on the surface of fabric piece 500.

In the non-limiting embodiment shown in Figs. 13A and 13B, the first portion 302 and the second portion 304 of the sheet manufacturing apparatus 300 are separated from each other. In further embodiments, the first and second portions of the sheet manufacturing apparatus may also be coupled to eliminate the need for winding and unwinding of the trimmed first material sheet, thereby simplifying the production process. For example, in some variant embodiments, the first portion of the sheet manufacturing apparatus may not include the first winding roller for winding the trimmed first material sheet and the second portion may not include the unwinding device. The trimmed first material sheet formed by the first portion during sheet manufacturing may be directly fed into the lamination device of the second portion for adhesive application and lamination.

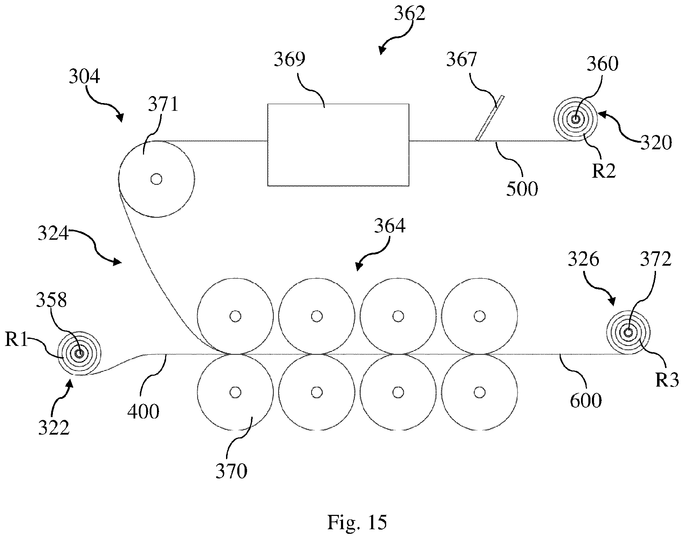

Fig. 15 shows a schematic diagram of the second portion of a non-limiting second embodiment of a sheet manufacturing apparatus according to the present invention in which the first portion of the second embodiment of the sheet manufacturing apparatus is omitted. All explanations above apply accordingly, unless they contradict newly mentioned features of this embodiment. The second embodiment of the sheet manufacturing apparatus has the same first portion as that of the first embodiment of the sheet manufacturing apparatus in Figs. 13A to 14B, so that a first material sheet roll R1 into which the trimmed first material sheet 400 is wound can also be obtained by the first portion of the second embodiment of the sheet manufacturing apparatus.

The second embodiment of the sheet manufacturing apparatus in Fig. 15 differs from the first embodiment of the sheet manufacturing apparatus in Figs. 13A to 14B in that the lamination device 324 of the second portion 304 of the sheet manufacturing apparatus of Fig. 15 is configured to apply the adhesive material onto the fabric piece 500 prior to laminating the fabric piece 500 to the first material sheet 400.

Referring to Fig. 15, the second portion 304 may include: a third feeding device 320, an unwinding device 322, a lamination device 324, and a second winding device 326. The first material sheet roll R1 may be fed into the second portion 304 of the sheet manufacturing apparatus 300. The first material sheet roll R1 may be unrolled by the unwinding device 322 to provide the trimmed first material sheet 400 to the lamination device 324 while the third feeding device 320 provides the fabric piece 500 to the lamination device 324. The lamination device 324 is configured to apply an adhesive material onto the fabric piece 500 and to laminate the fabric piece 500 to the first material sheet 400 through the adhesive material to form the second material sheet 600.

In the illustrated embodiment, the third feeding device 320 includes an unwinding roller 360, the unwinding device 322 includes an unwinding roller 358, the lamination device 324 includes a coating unit 362 and a lamination unit 364, and the second winding device 326 includes a winding roller 372.

The coating unit 362 may include a scraper 367, an oven 369, and a conveying roller 371, and may be used to apply an adhesive material, such as solvent-based PU adhesive or water-based PU adhesive, onto the fabric piece 500. The operating principle of the coating unit 362 will be described below taking a solvent-based PU adhesive as an example. The fabric piece 500 may be fed from the unwinding roller 360 into the coating unit 362, specifically beneath the scraper 367. The solvent-based PU adhesive mixture may be applied to one side of the scraper 367, and then the thickness of the adhesive mixture applied to the fabric piece 500 by the scraper 367 may be controlled by adjusting the gap between the scraper 367 and the fabric piece 500. The solvent-based PU adhesive mixture may be formed by mixing polyurethane resin and crosslinker in certain proportions. Then, the fabric piece 500 onto which the solvent-based PU adhesive mixture has been applied may be conveyed to the oven 369 for drying to form the fabric piece 500 coated with the solvent-based PU adhesive, i.e., the coated fabric piece 500.

The lamination unit 364 includes one or multiple pairs of oppositely disposed lamination rollers 370. The first material sheet roll R1 may be unwound by the unwinding roller 358 to feed the trimmed first material sheet 400 between the oppositely disposed lamination rollers 370, while the coated fabric piece 500 is fed between the opposing lamination rollers 370 by the conveying roller 371 such that the first material sheet 400 and the fabric piece 500 are laminated together through the adhesive material, e.g. under pressure, to form the second material sheet 600. The second material sheet 600 includes a fabric layer formed of the fabric piece 500, an adhesive layer formed of the adhesive material, and a substrate layer formed of the first material sheet 400, the fabric layer being laminated to a first layer of the substrate layer through the adhesive layer.

The laminated second material sheet 600 may be directly used as a finished sheet 200 without subsequent treatment, and is wound into a finished sheet roll R3 by the winding roller 372 of the second winding device 326. It is to be appreciated that, in further embodiments, the laminated second material sheet 600 may be subjected to subsequent processing such as shaping and cleaning according to actual needs to form the finished sheet 200.

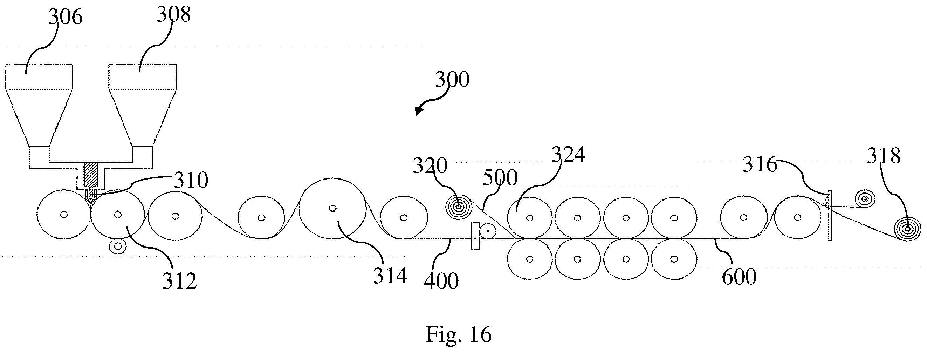

Fig. 16 shows a schematic diagram of a non-limiting third embodiment of a sheet manufacturing apparatus according to the present invention, which can be used to manufacture the sheet 200 shown in Fig. 12 and which eliminates the need for the winding and unwinding of the first material sheet during the manufacturing process. All explanations above apply accordingly, unless they contradict newly mentioned features of this embodiment.

The sheet manufacturing apparatus 300 shown in Fig. 16 mainly includes: a first feeding device 306, a second feeding device 308, an extrusion device 310, a pressing device 312, a cooling device 314, a third feeding device 320, a lamination device 324, a trimming device 316, and a winding device 318. The first feeding device 306, the second feeding device 308, the extrusion device 310, the pressing device 312, the cooling device 314, the third feeding device 320, the lamination device 324, the trimming device 316, and the winding device 318 of the sheet manufacturing apparatus 300 shown in Fig. 16 may have the same configuration as the first feeding device, the second feeding device, the extrusion device, the pressing device, the cooling device, the third feeding device, the lamination device, the trimming device, and the first winding device, respectively, of the sheet manufacturing apparatus shown in Figs. 13A and 13B. The sheet manufacturing apparatus 300 shown in Fig. 16 differs from the sheet manufacturing apparatus shown in Fig. 13A and Fig. 13B in that the sheet manufacturing apparatus 300 shown in Fig. 16 is configured to: convey the first material sheet 400, cooled by the cooling device 314, directly to the lamination device 324 to be coated with the adhesive material and laminated to the fabric piece 500 by the adhesive material to form a second material sheet 600; trim the laminated second material sheet 600 with the trimming device 316; and wind the trimmed second material sheet 600 with the winding device 318 and winding the off cuts generated from the trimming process.

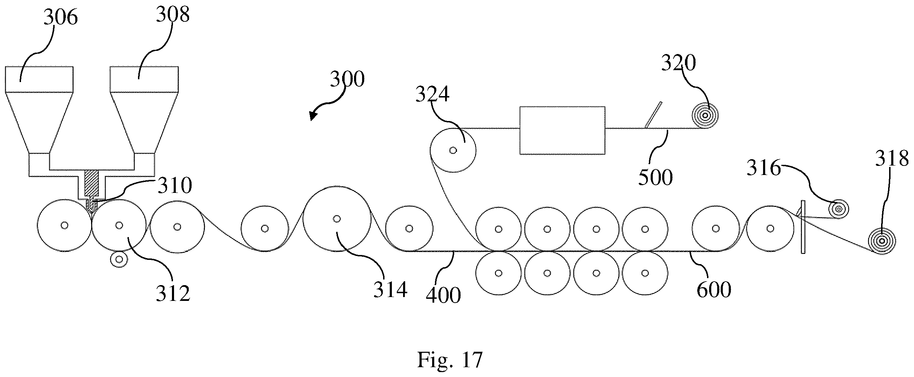

Fig. 17 shows a schematic diagram of a non-limiting fourth embodiment of a sheet manufacturing apparatus according to the present invention. All explanations above apply accordingly, unless they contradict newly mentioned features of this embodiment. The sheet manufacturing apparatus in Fig. 17 is similar to the sheet manufacturing apparatus in Fig. 16. The sheet manufacturing apparatus in Fig. 17 mainly includes: a first feeding device 306, a second feeding device 308, an extrusion device 310, a pressing device 312, a cooling device 314, a third feeding device 320, a lamination device 324, a trimming device 316, and a winding device 318. The sheet manufacturing apparatus in Fig. 17 differs from the sheet manufacturing apparatus in Fig. 16 in that the lamination device 324 of the sheet manufacturing apparatus 300 in Fig. 17 is configured to apply the adhesive material onto the fabric piece 500 prior to laminating the fabric piece 500 to the first material sheet 400. The lamination device 324 of the sheet manufacturing apparatus 300 in Fig. 17 has the same configuration as that of the lamination device in Fig. 15, and may be used to apply an adhesive material such as solvent-based PU adhesive or water-based PU adhesive onto the fabric piece 500. Then, the fabric piece 500 is laminated, after the adhesive application, to the first material sheet 400 to form a second material sheet 600.

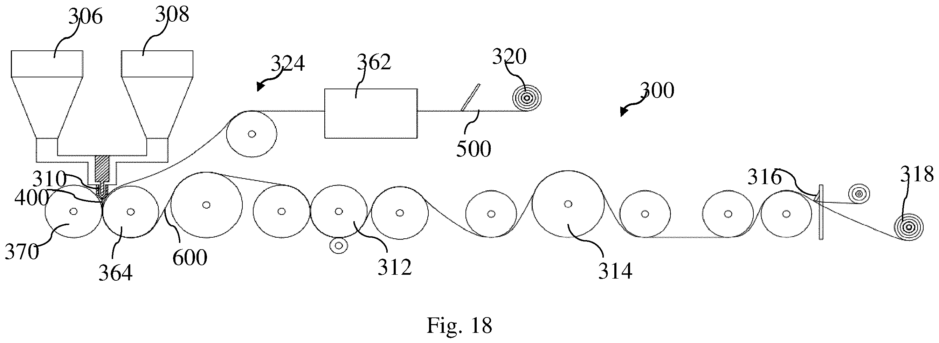

Fig. 18 shows a schematic diagram of a fifth non-limiting embodiment of a sheet manufacturing apparatus according to the present invention. All explanations above apply accordingly, unless they contradict newly mentioned features of this embodiment. The sheet manufacturing apparatus in Fig. 18 is similar to the sheet manufacturing apparatus in Fig. 17. The sheet manufacturing apparatus in Fig. 18 mainly includes: a first feeding device 306, a second feeding device 308, an extrusion device 310, a third feeding device 320, a lamination device 324, a pressing device 312, a cooling device 314, a trimming device 316, and a winding device 318.

The sheet manufacturing apparatus in Fig. 18 differs from the sheet manufacturing apparatus in Fig. 17 mainly in that the sheet manufacturing apparatus 300 in Fig. 18 is configured to feed the first material sheet 400 formed by the extrusion device 310 directly into the lamination device 324 to form the second material sheet 600 by laminating with the fabric piece 500 by the adhesive material in the lamination device 324. The following will mainly explain the differences between them.

Referring to Fig. 18, the third feeding device 320 supplies the fabric piece 500 to the coating unit 362 of the lamination device 324, an adhesive material (e.g., solvent-based PU adhesive or water-based PU adhesive) is applied onto the fabric piece 500 by the coating unit 362, and the fabric piece 500 coated with the adhesive material is dried to form the coated fabric piece 500. Next, the coated fabric piece 500 is fed between the oppositely disposed lamination rollers 370 of the lamination unit 364 of the lamination device 324, while the first material sheet 400 discharged from the material outlet of the extrusion device 310 is also directly fed between the oppositely disposed lamination rollers 370 of the lamination unit 364, such that the coated fabric piece 500 and the first layer of the first material sheet 400 are bonded to each other, for example under pressure, to form the second material sheet 600. Since the first material sheet 400 delivered from the material outlet of the extrusion device 310 is usually not completely solidified due to the high temperature, the first material sheet 400 is directly fed into the lamination unit 364 for lamination, which is beneficial to the tight bonding of the first material sheet 400 and the adhesive material, thereby improving the bonding strength between the first material sheet 400 and the fabric piece 500. The second material sheet 600 delivered from the lamination unit 364 of the lamination device 324 may subsequently be flattened and/or embossed, cooled, trimmed, and rolled by the pressing device 312, the cooling device 314, the trimming device 316, and the winding device 318, respectively.

It is to be appreciated that, although in the embodiment shown in Fig. 18, the laminating and flattening and/or embossing are performed by the lamination device 324 and the pressing device 312, respectively, in further embodiments, the lamination unit of the lamination device may also integrate the flattening and/or embossing functions such that the laminating and flattening and/or embossing may be accomplished simultaneously in one single device (e.g. the same roller set).

It is to be understood that Figs. 13A to 18 are only schematic diagrams of exemplary embodiments of a sheet manufacturing apparatus according to the present invention and are only illustrative and not limiting. It is to be understood that the specific configuration of the devices of the sheet manufacturing apparatus and the arrangement order of the devices can be adjusted according to actual needs, and some devices may be added or eliminated. As an example, the number and arrangement of rollers included in the respective devices of the sheet manufacturing apparatus shown in the drawings are only illustrative, and the respective devices of the sheet manufacturing apparatus may include other suitable numbers of rollers, or the rollers may be arranged in other ways. As another example, in some embodiments, the pressing device and the cooling device may be integrated into one device to press and completely cool the first material sheet. Still for another example, the sheet manufacturing apparatus may also include additional cleaning devices for cleaning and dedusting the fabricated sheet.

Corresponding to the exemplary embodiments of the sheet manufacturing apparatus according to the present invention, the present invention also provides a sheet manufacturing method.

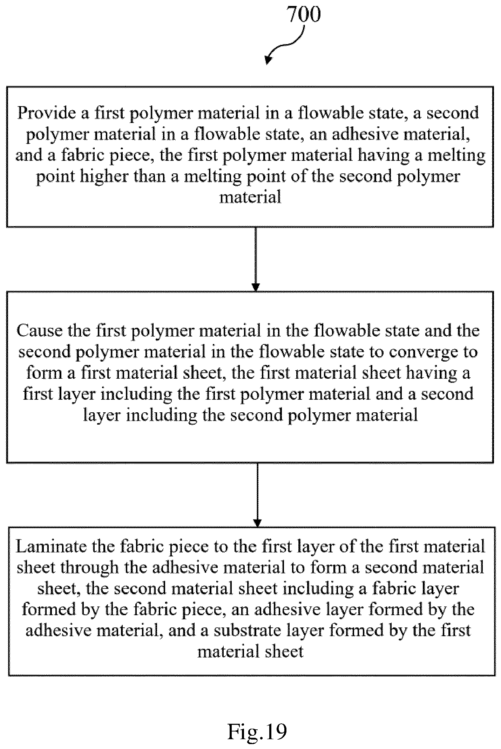

Fig. 19 shows a schematic flow chart of an exemplary non-limiting embodiment of a sheet manufacturing method according to the present invention. All explanations above apply accordingly, unless they contradict newly mentioned features of this embodiment. The sheet manufacturing method 700 in Fig. 19 includes: providing a first polymer material in a flowable state, a second polymer material in a flowable state, an adhesive material, and a fabric piece, the first polymer material having a melting point higher than a melting point of the second polymer material; causing the first polymer material in the flowable state and the second polymer material in the flowable state to converge to form a first material sheet, the first material sheet having a first layer including the first polymer material and a second layer including the second polymer material; and laminating the fabric piece to the first layer of the first material sheet by an adhesive material to form a second material sheet, the second material sheet including a fabric layer formed by the fabric piece, an adhesive layer formed by the adhesive material, and a substrate layer formed by the first material sheet.

In some embodiments, the first material sheet obtained by the sheet manufacturing method includes an intermediate layer between the first layer and the second layer, and the intermediate layer includes a mixture of the first polymer material and the second polymer material. In some embodiments, both the first polymer material and the second polymer material used in the sheet manufacturing method are thermoplastic polyurethane.

In some embodiments of a sheet manufacturing method based on, for example, the sheet manufacturing apparatus shown in Figs. 13A to 17, the sheet manufacturing method further includes applying the adhesive material onto the fabric piece or the first layer of the first material sheet prior to laminating the fabric piece to the first material sheet. In some embodiments of a sheet manufacturing method based on, for example, the sheet manufacturing apparatus shown in Figs. 13A to 17, the sheet manufacturing method further includes pressing the first material sheet after forming the first material sheet, wherein the pressing may include flattening and/or embossing. In some embodiments of a sheet manufacturing method based on, for example, the sheet manufacturing apparatus shown in Figs. 13A to 17, the sheet manufacturing method further includes cooling the pressed first material sheet.

In some embodiments of a sheet manufacturing method based on, for example, the sheet manufacturing apparatus shown in Figs. 13A to 15, the sheet manufacturing method includes trimming the cooled first material sheet, and the fabric piece is laminated to the trimmed first material sheet by the adhesive material to form the second material sheet. Optionally, the sheet manufacturing method further includes winding the trimmed first material sheet into a first material sheet roll, and unwinding the first material sheet roll to provide the trimmed first material sheet for lamination with the fabric piece. In other embodiments of a sheet manufacturing method based on, for example, the sheet manufacturing apparatus shown in Figs. 16 and 17, the sheet manufacturing method includes trimming the second material sheet after laminating the fabric piece to the first material sheet by the adhesive material to form the second material sheet.

In some embodiments of a sheet manufacturing method based on, for example, the sheet manufacturing apparatus shown in Fig. 18, the sheet manufacturing method includes applying the adhesive material onto the fabric piece and laminating the fabric piece, onto which the adhesive material has been applied, to the first material sheet to form the second material sheet. In some embodiments of a sheet manufacturing method based on, for example, the sheet manufacturing apparatus shown in Fig. 18, the sheet manufacturing method further includes pressing the second material sheet while or after laminating the fabric piece onto which the adhesive material has been applied to the first material sheet to form the second material sheet, the pressing including flattening and/or embossing. In some embodiments of a sheet manufacturing method based on, for example, the sheet manufacturing apparatus shown in Fig. 18, the sheet manufacturing method further includes cooling the pressed second material sheet. In some embodiments of a sheet manufacturing method based on, for example, the sheet manufacturing apparatus shown in Fig. 18, the sheet manufacturing method further includes trimming the cooled second material sheet.

It should also be understood that modifications, variations, and equivalents of these embodiments can readily be made by those skilled in the art in light of the disclosure. For example, the illustrated or described features as part of an embodiment can be used with another embodiment to provide a further embodiment. The present disclosure is intended to cover these modifications, variations, and equivalents. The technical content and technical features of the present invention are disclosed above. However, it is to be understood that various changes and improvements to the concept disclosed above can be made by those skilled in the art under the creation idea of the present invention and all fall within the scope of protection of the present invention. The description of the above embodiments is illustrative and not restrictive, and the scope of protection of the present invention is defined by the claims.

## Claims

1. A sheet (200) comprising:
a fabric layer (202);
an adhesive layer (204); and
a substrate layer (206) having a first layer (208) comprising a first polymer material and a second layer (210) comprising a second polymer material, the first polymer material having a melting point higher than a melting point of the second polymer material,
wherein the substrate layer (206) is formed by converging the first polymer material in a flowable state and the second polymer material in a flowable state, and the fabric layer (202) is laminated to the first layer (208) through the adhesive layer (204).

2. The sheet (200) according to claim 1, wherein the substrate layer (206) comprises an intermediate layer (212) between the first layer (208) and the second layer (210), and the intermediate layer (212) comprises a mixture of the first polymer material and the second polymer material.

3. The sheet (200) according to claim 1 or 2, wherein each of the first polymer material and the second polymer material
- is composed of one or more of a thermoplastic polyurethane elastomer, polyethylene, polypropylene, polyvinyl chloride, polyvinylidene chloride, or polyurethane, or
- are thermoplastic polyurethane elastomers.

4. The sheet (200) according to any one of the preceding claims, wherein the melting point of the first polymer material is at least 15°C higher than the melting point of the second polymer material.

5. The sheet (200) according to any one of the preceding claims, wherein the adhesive layer (204) is formed by polyurethane adhesive.

6. The sheet (200) according to claim 5, wherein the polyurethane adhesive is solvent-based PU adhesive, water-based PU adhesive, or polyurethane reactive hot melt adhesive.

7. The sheet (200) according to any one of the preceding claims, wherein the fabric layer (202) comprises a polyurethane coating on a side facing the adhesive layer (204).

8. The sheet (200) according to any one of the preceding claims, wherein the first layer (208) has a Shore A hardness ranging from 80 HA to 98 HA, and the second layer (210) has a Shore A hardness ranging from 75 HA to 95 HA.

9. The sheet (200) according to any one of the preceding claims, wherein a ratio of thickness of the first layer (208) to the second layer (210) ranges from 1: 1 to 1:4.

10. The sheet (200) according to any one of the preceding claims, wherein the substrate layer (206) has a thickness ranging from 0.01 mm to 0.40 mm.

11. An inflatable product, wherein at least a portion of the inflatable product is made of the sheet (200) according to any one of claims 1 to 10.

12. The inflatable product according to claim 11, wherein the inflatable product is an inflatable pad (100) comprising a top sheet (102) and a bottom sheet (104) connected to each other to jointly define an inflatable chamber (106), the top sheet (102) and the bottom sheet (104) being made of the sheet (200).

13. The inflatable product according to claim 12, wherein the inflatable pad (100) further comprises a connecting sheet (108), the connecting sheet (108) being arranged in the inflatable chamber (106) between the top sheet (102) and the bottom sheet (104) and comprising a plurality of first welding regions (110) and a plurality of second welding regions (112), wherein the plurality of first welding regions (110) and the plurality of second welding regions (112) are staggered from each other, the plurality of first welding regions (110) are welded to the top sheet (102), and the plurality of second welding regions (112) are welded to the bottom sheet (104).

14. The inflatable product according to claim 12 or 13, wherein the inflatable pad (100) further comprises at least one thermal insulation sheet (114) arranged in the inflatable chamber (106), each thermal insulation sheet (114) comprising a polymer substrate (116) and a metal coating layer (118) applied to at least one of two opposite sides of the polymer substrate (116).

15. The inflatable product according to any one of claims 12 to 14, wherein the inflatable pad (100) further comprises a plurality of tensioning members (122), each tensioning member (122) having a top edge (124) and a bottom edge (126) welded to the top sheet (102) and the bottom sheet (104), respectively, the tensioning member (122) preferably being made of the sheet (200) or made of the substrate layer (206) of the sheet (200).

16. The inflatable product according to claim 12, wherein the inflatable pad (100) further comprises a foam core (128), and the top sheet (102) and the bottom sheet (104) are respectively attached to a top surface (130) and a bottom surface (132) of the foam core (128), the foam core (128), preferably comprising a plurality of uniformly distributed apertures (134) or a plurality of uniformly distributed grooves (136a, 136b).

17. The inflatable product according to any one of claims 12 to 16, wherein the inflatable pad (100) further comprises a lateral sheet (105), the periphery of the top sheet (102) is connected to a top edge (124) of the lateral sheet (105), and the periphery of the bottom sheet (104) is connected to a bottom edge (126) of the lateral sheet (105), such that the top sheet (102), the bottom sheet (104) and the lateral sheet (105) jointly define the inflatable chamber (106).
